(19)

Europäisches Patentamt

European Patent Office

Office européen des brevets

(11) **EP 4 697 832 A1**

(12) **EUROPEAN PATENT APPLICATION**
published in accordance with Art. 153(4) EPC

(43) Date of publication:
**18.02.2026 Bulletin 2026/08**

(21) Application number: **24806450.3**

(22) Date of filing: **09.05.2024**

(51) International Patent Classification (IPC):
*H04W 72/0453* (2023.01)

(52) Cooperative Patent Classification (CPC):
**H04L 5/14; H04W 72/0453**

(86) International application number:
**PCT/CN2024/092056**

(87) International publication number:
**WO 2024/235098 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.05.2023  CN 202310541409**

(71) Applicant: **Huawei Technologies Co., Ltd.
Shenzhen, Guangdong 518129 (CN)**

(72) Inventors:
• **LU, Shaozhong
  Shenzhen, Guangdong 518129 (CN)**
• **GUO, Zhiheng
  Shenzhen, Guangdong 518129 (CN)**
• **SONG, Xinghua
  Shenzhen, Guangdong 518129 (CN)**
• **HOU, Hailong
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57)     A communication method and apparatus are provided. In the communication method, a second communication apparatus may indicate a first frequency unit set and a first frequency spacing by using first information. The first communication apparatus may determine a second frequency unit set based on the first frequency unit set and the first frequency spacing. The first frequency unit set and the second frequency unit set are respectively frequency units used to transmit a first type of signal in different types of time units.

```
┌──────────────┐                    ┌──────────────┐
│    First     │                    │    Second    │
│communication │                    │communication │
│  apparatus   │                    │  apparatus   │
└──────┬───────┘                    └──────┬───────┘
       │   S601: First information (indicating a  │
       │      first frequency unit set and a first │
       │ ◄────── frequency spacing) ───────────────│
       │                                           │
  ┌────┴─────────────────┐                         │
  │ S602: Determine the first                      │
  │ frequency unit set and a                       │
  │ second frequency unit set                      │
  └────┬─────────────────┘                         │
       │                                           │
       │ S603: Send a first type of signal on a part of│
       │ or all frequency units in the first frequency │
       │ unit set and on a part of or all frequency ──►│
       │ units in the second frequency unit set        │
       │                                           │
```

FIG. 6

**Description**

CROSS-REFERENCE TO RELATED APPLICATIONS

This application claims priority to Chinese Patent Application No. 202310541409.3, filed with the China National Intellectual Property Administration on May 14, 2023 and entitled "COMMUNICATION METHOD AND APPARATUS", which is incorporated herein by reference in its entirety.

TECHNICAL FIELD

Embodiments of this application relate to the field of communication technologies, and in particular, to a communication method and apparatus.

BACKGROUND

In time division duplexing (time division duplexing, TDD), a time domain resource usually includes three downlink slots, one special slot, and one uplink slot. The uplink slot is used for uplink transmission, the downlink slot is used for downlink transmission, the special slot includes at least a flexible symbol, and the flexible symbol may be used for uplink transmission, or may be used for downlink transmission, or may be used for a guard period. In TDD, a base station may indicate, to a terminal device, that a part of frequency range corresponding to an uplink symbol is used to transmit a signal, and the signal may be carried, for example, on a physical uplink shared channel (physical uplink shared channel, PUSCH). However, in TDD, there are few uplink slots, resulting in low uplink coverage. A possible manner of enhancing uplink coverage is subband non-overlapping full duplex (subband non-overlapping full duplex, SBFD). In SBFD, a time domain resource may also include three downlink slots, one special slot, and one uplink slot, and a frequency band in the downlink slot may be divided into one or more uplink subbands. In SBFD, more resources can be used for uplink transmission, thereby helping improve uplink coverage.
However, in SBFD, a part of or all uplink subbands in the one or more uplink subbands may be used to transmit a signal. However, there is no corresponding solution to how the base station indicates, to the terminal device, a frequency domain resource for transmitting an uplink signal.

SUMMARY

Embodiments of this application provide a communication method and apparatus, to provide a manner of determining a frequency domain resource for transmitting a signal.
According to a first aspect, an embodiment of this application provides a communication method, and the method may be performed by a first communication apparatus. The first communication apparatus is, for example, a terminal device, or a software module or a hardware module (such as a chip) in the terminal device. The method includes: receiving first information, where the first information indicates a first frequency unit set and a first frequency spacing, the first frequency spacing indicates a quantity of frequency units that space the first frequency unit set and a second frequency unit set, and the first frequency unit set is a frequency unit in a first type of time unit; and sending a first type of signal on a part of or all first frequency units in the first frequency unit set and on a part of or all second frequency units in the second frequency unit set, where the second frequency unit set is determined based on the first frequency spacing and the first frequency unit set, the second frequency unit set is a frequency unit in a second type of time unit, the first type of time unit is one of a subband full-duplex SBFD time unit and a non-SBFD time unit, the second type of time unit is the other of the subband full-duplex SBFD time unit and the non-SBFD time unit, and the non-SBFD time unit includes an uplink time unit and/or a flexible time unit.
In this embodiment of this application, the first communication apparatus may determine a plurality of frequency unit sets based on the first information, to provide a manner that is applicable to SBFD and that is of determining a frequency domain resource for transmitting a signal. In addition, the first communication apparatus may determine frequency unit sets in two types of time units by using only one piece of information. A network side (for example, a second communication apparatus) does not need to respectively indicate the frequency unit sets in the two types of time units by using a plurality of pieces of information, and a quantity of interactions between the first communication apparatus and the network side is not increased additionally. In addition, the second frequency unit set is determined based on the first frequency unit set and the first frequency spacing. Therefore, the second frequency unit set may be changed by changing the first frequency spacing, thereby improving flexibility of indicating the second frequency unit set.
In a possible implementation, a frequency range of at least one frequency unit in the second frequency unit set is different from a frequency range of any frequency unit in the first frequency unit set.
In the foregoing implementation, the second frequency unit set and the first frequency unit set may be not completely the same or completely different. In other words, a frequency range corresponding to the second frequency unit set may be different from a frequency range corresponding to the first frequency unit set, thereby improving flexibility of the second frequency unit set.

In a possible implementation, the first frequency unit set and the first frequency spacing may be indicated by a same field in the first information. For example, a first part of bits in the first field indicates the first frequency unit set, and a second part of bits in the first field indicates the first frequency spacing. Alternatively, the first frequency unit set and the first frequency spacing may be indicated by different fields in the first information. For example, a part of or all bits in the first field in the first information indicate the first frequency unit set, and a second field in the first information indicates the first frequency spacing.

In the foregoing implementation, two manners in which the first information indicates the first frequency unit set and the first frequency spacing are provided. In one manner, one field in the first information may indicate the first frequency unit set and the first frequency spacing, so that a quantity of fields in the first information can be reduced.

In a possible implementation, a bit index of the first part of bits in the first field is associated with an index of a frequency unit in which a frequency range of a first uplink subband is located, and the first uplink subband is an uplink subband in the SBFD time unit; and/or a bit quantity of the first part of bits is M, and M is a positive integer.

In the foregoing implementation, the first communication apparatus may determine the bit index of the first part of bits in the first field based on the index of the frequency unit in which the frequency range of the first uplink subband is located. In this way, the first communication apparatus does not need to be individually indicated the bit index of the first part of bits in the first field, thereby reducing a quantity of interactions between the first communication apparatus and the network side. In addition, the bit quantity of the first part of bits may be a value, so that the first communication apparatus determines the bit quantity of the first part of bits simply and directly.

In a possible implementation, the first part of bits includes: M bits starting from a most significant bit and spanning from a high-order bit to a low-order bit in the first field; or M bits starting from a least significant bit and spanning from a low-order bit to a high-order bit in the first field.

In the foregoing implementation, relative locations of the first part of bits in the first field are defined. In this way, the network side may not need to separately indicate the locations to the first communication apparatus. This can help reduce a quantity of interactions between the first communication apparatus and the network side, and help the first communication apparatus determine the first part of bits from the first information.

In a possible implementation, the bit quantity of the first part of bits is one of the following: (1) a quantity of frequency units in which the frequency range of the first uplink subband is located; or (2)

$$\left\lceil \log_2\left(N_{RB}^{UL,Subband}\left(N_{RB}^{UL,Subband} + 1\right)/2\right)\right\rceil \text{ ; or (3)} \quad \left\lceil \log_2\left(N_{RB}^{UL,BWP}\left(N_{RB}^{UL,BWP} + 1\right)/2\right)\right\rceil \text{ , where}$$

$N_{RB}^{UL,Subband}$ represents a quantity of resource blocks included in the first uplink subband, $N_{RB}^{UL,BWP}$ represents a quantity of resource blocks included in an uplink bandwidth part, and the first uplink subband is an uplink subband in the SBFD time unit.

In the foregoing implementation, three implementations (for example, (1) to (3)) of the bit quantity of the first part of bits are provided. For example, when the first type of time unit is an SBFD time unit, the frequency unit used to transmit the first type of signal is a frequency unit that belongs to an uplink subband. Therefore, the quantity of the first part of bits is set to the quantity of frequency units in which the frequency range of the first uplink subband is located, so that the first part of bits can indicate the first frequency unit set in a form of a bitmap, and the quantity of the first part of bits can be reduced as much as possible. Alternatively, when the bit quantity of the first part of bits is shown in (2) or (3), the first part of bits may indicate the first frequency unit set by indicating a resource indication value. In this way, the first part of bits can indicate the first frequency unit set in a plurality of manners.

In a possible implementation, the second part of bits is one of the following: other bits; or at least one bit starting from a most significant bit and spanning from a high-order bit to a low-order bit in the other bits; or at least one bit starting from a least significant bit and spanning from a low-order bit to a high-order bit in the other bits, where the other bits are bits other than the first part of bits in the first field.

In the foregoing implementation, a plurality of possibilities for relative locations of the second part of bits in the first field are provided. In this way, the network side may not need to separately indicate the locations to the first communication apparatus. This can help reduce a quantity of interactions between the first communication apparatus and the network side, and help the first communication apparatus determine the first part of bits from the first information.

In a possible implementation, a bit quantity of the second part of bits is one of the following:

$$N_{RBG} - N_{RBG}^{UL,subband} \quad \text{; or}$$

$$\left\lceil \log_2\left(N_{RB}^{UL,BWP}\left(N_{RB}^{UL,BWP} + 1\right)/2\right)\right\rceil - \left\lceil \log_2\left(N_{RB}^{UL,Subband}\left(N_{RB}^{UL,Subband} + 1\right)/2\right)\right\rceil \quad \text{; or}$$

$$N_{RBG} - \left\lceil \log_2\left(N_{RB}^{UL,BWP}\left(N_{RB}^{UL,BWP} + 1\right)/2\right)\right\rceil \qquad ; \qquad \text{or}$$

$$\max\left(\left\lceil \log_2\left(N_{RB}^{UL,BWP}\left(N_{RB}^{UL,BWP} + 1\right)/2\right)\right\rceil, N_{RBG}\right) - M$$ ; or a first value, where the first value is an integer greater than 0, where $N_{RBG}$ represents a quantity of resource block groups included in the uplink bandwidth part, $N_{RB}^{UL,Subband}$ represents the quantity of resource blocks included in the first uplink subband, $N_{RB}^{UL,BWP}$ represents the quantity of resource blocks included in the uplink bandwidth part, M is the bit quantity of the first part of bits, max represents taking a maximum value, and $\lceil \ \rceil$ represents rounding up.

In the foregoing implementation, a plurality of implementations of the bit quantity of the second part of bits are provided.

In a possible implementation, each bit in the first part of bits corresponds to one frequency unit in which the frequency range of the first uplink subband is located, a value of each bit indicates that the frequency unit belongs to or does not belong to the first frequency unit set, and the first uplink subband is an uplink subband in the SBFD time unit; or the first part of bits indicates a first resource indication value RIV, and the first RIV is used to determine the first frequency unit set.

In the foregoing implementation, the first part of bits may indicate the first frequency unit set in a form of a bitmap or an RIV, thereby enriching manners in which the first part of bits indicates the first frequency unit set.

In a possible implementation, the method further includes: determining a first number and a quantity of allocated resource blocks based on the first RIV, where the first number is a number, in the first uplink subband, of a starting frequency unit in the first frequency unit set, and the first uplink subband is an uplink subband in the SBFD time unit, where an index of any frequency unit in the first frequency unit set is: any index from a first index to a second index, where the first index is a sum of the first number and an index of a starting frequency unit in the first uplink subband, and the second index is determined based on the first index and the quantity of allocated resource blocks. For example, the second index is determined based on the first index and the quantity of allocated resource blocks. Specifically, for example, the second index is a result of subtracting 1 from a sum of the first index and the quantity of allocated resource blocks.

In the foregoing implementation, a manner in which the first communication apparatus determines the first frequency unit set based on the first RIV is provided.

In a possible implementation, the second part of bits indicates a second value, and the second value is used to determine the first frequency spacing from a first frequency spacing set; or the second part of bits carries the first frequency spacing. For example, the second value may indicate an index, a row number, or a column number of the first frequency spacing in the first frequency spacing set.

In the foregoing implementation, the second part of bits may indicate the second value, to indicate the first frequency spacing, thereby helping reduce the bit quantity of the second part of bits. Alternatively, the second part of bits may directly indicate the first frequency spacing, to simplify a process in which the first communication apparatus determines the first frequency spacing.

In a possible implementation, the second field indicates a third value, and the first frequency spacing is a frequency spacing corresponding to the third value in a time domain resource allocation TDRA table; and the TDRA table indicates a first time domain resource set and a first frequency spacing set, and the first time domain resource set is used to determine a time domain resource for transmitting the first type of signal.

In the foregoing implementation, the first frequency spacing may be indicated by the second field indicating the time domain resource, which is equivalent to reusing the second field to indicate the first frequency spacing, thereby helping reduce the bit quantity of the first information.

In a possible implementation, the method further includes: receiving first indication information, where the first indication information indicates a first time unit, the first time unit is an hth time unit used to transmit the first type of signal, h is a positive integer, and a type of the first type of time unit is a type of the first time unit. The first indication information may be some information in the first information. In this case, the first indication information is, for example, information corresponding to the second field, or the first indication information and the first information may be different information. For example, h is 1.

In the foregoing implementation, the first communication apparatus may determine the type of the first type of time unit based on a tth time unit. In this way, the first information may flexibly indicate the first frequency unit set. For example, the first frequency unit set may be a frequency unit that is in the SBFD time unit and that is used to send the first type of signal, or a frequency unit that is in the non-SBFD time unit and that is used to send the first type of signal.

In a possible implementation, the first type of time unit is an SBFD time unit, and the second type of time unit is an uplink time unit.

In a possible implementation, an index of an ith frequency unit in the second frequency unit set is determined based on an index of a jth frequency unit in the first frequency unit set and the first frequency spacing; or an index of an ith frequency unit in the second frequency unit set is determined based on an index of a jth frequency unit in the first frequency unit set, the first frequency spacing, and a first parameter, where i and j are positive integers, and the first parameter is one of the following: the quantity of resource blocks included in the uplink bandwidth part; or the quantity of resource block groups included in the uplink bandwidth part; or the quantity of resource blocks included in the first uplink subband, where the first uplink subband is an uplink subband in the SBFD time unit.

In the foregoing implementation, a plurality of manners of determining the second frequency unit set are provided. An index of a frequency unit in the second frequency unit set may be determined based on a frequency unit in the first frequency unit set and the first frequency spacing, or may be determined based on a frequency unit in the first frequency unit set, the first frequency spacing, and the first parameter. A manner of determining the second frequency unit set is simple.

In a possible implementation, a first frequency difference is associated with a second frequency difference, where the first frequency difference is a starting frequency difference or an ending frequency difference between an $i^{th}$ frequency unit and a $k^{th}$ frequency unit in the second frequency unit set, and the second frequency difference is a starting frequency difference or an ending frequency difference between a $j^{th}$ frequency unit and an $m^{th}$ frequency unit in the first frequency unit set; and/or a first quantity is associated with a second quantity, the first quantity is a quantity of frequency units included in the second frequency unit set, and the second quantity is a quantity of frequency units included in the first frequency unit set, where i, j, m, and k are positive integers.

In the foregoing implementation, a relative relationship between two frequency units in the second frequency unit set may be a relative relationship between two frequency units in the first frequency unit set. In this way, a manner of determining the second frequency unit set based on the first frequency unit set is provided. In addition, the first communication apparatus may determine, based on the quantity of frequency units included in the first frequency unit set, the quantity of frequency units included in the second frequency unit set.

In a possible implementation, a bit quantity of the first field is one of the following: $N_{RBG}$ ; or

$$\left\lceil \log_2\left(N_{RB}^{UL,BWP}\left(N_{RB}^{UL,BWP} + 1\right)/2\right)\right\rceil \quad ; \quad \text{or} \quad \left\lceil \log_2\left(N_{RB}^{UL,BWP}\left(N_{RB}^{UL,BWP} + 1\right)/2\right)\right\rceil \quad ; \quad \text{or}$$

$$\left\lceil \log_2\left(N_{RB}^{UL,BWP}\left(N_{RB}^{UL,BWP} + 1\right)/2\right)\right\rceil + N_x \quad ; \quad \text{or}$$

$$\max\left(\left\lceil \log_2\left(N_{RB}^{UL,BWP}\left(N_{RB}^{UL,BWP} + 1\right)/2\right)\right\rceil, N_{RBG}\right) + 1 \quad ; \quad \text{or}$$

$$\max\left(\left\lceil \log_2\left(N_{RB}^{UL,BWP}\left(N_{RB}^{UL,BWP} + 1\right)/2\right)\right\rceil + N_x, N_{RBG}\right) + 1 \text{ , where } N_{RBG} \text{ is the quantity of resource block}$$

groups included in the uplink bandwidth part, $N_x$ is the bit quantity of the second part of bits, $N_{RBG}$ represents the quantity of resource block groups included in the uplink bandwidth part, $N_{RB}^{UL,Subband}$ represents the quantity of resource blocks included in the first uplink subband, $N_{RB}^{UL,BWP}$ represents the quantity of resource blocks included in the uplink bandwidth part, M is the bit quantity of the first part of bits, max represents taking a maximum value, and $\lceil \ \rceil$ represents rounding up.

In the foregoing implementation, a plurality of implementations of the bit quantity of the first field are provided.

In a possible implementation, any frequency unit in the first frequency unit set or any frequency unit in the second frequency unit set is located in an uplink subband.

In a possible implementation, the first information further indicates a resource allocation type, and the resource allocation type indicates a type of a resource allocated for transmitting the first type of signal.

According to a second aspect, an embodiment of this application provides a communication method, and the method may be performed by a second communication apparatus. The second communication apparatus is, for example, a network device, or a software module or a hardware module (such as a chip) in the network device, and the network device is, for example, an access network apparatus or a core network apparatus. The method includes: sending first information, where the first information indicates a first frequency unit set and a first frequency spacing, the first frequency spacing indicates a quantity of frequency units that space the first frequency unit set and a second frequency unit set, and the first frequency unit set is a frequency unit in a first type of time unit; and receiving a first type of signal on a part of or all first frequency units in the first frequency unit set and on a part of or all second frequency units in the second frequency unit set, where the second frequency unit set is a frequency unit in a second type of time unit, the first type of time unit is one of a subband full-duplex SBFD time unit and a non-SBFD time unit, the second type of time unit is the other of the subband full-duplex SBFD time unit and the non-SBFD time unit, the non-SBFD time unit includes an uplink time unit and/or a flexible time unit, and the first frequency unit set and the first frequency spacing are used to determine the second frequency unit set.

In a possible implementation, a frequency range of at least one frequency unit in the second frequency unit set is different from a frequency range of any frequency unit in the first frequency unit set.

In a possible implementation, the first frequency unit set and the first frequency spacing may be indicated by a same field in the first information. For example, a first part of bits in the first field indicates the first frequency unit set, and a second part of bits in the first field indicates the first frequency spacing. Alternatively, the first frequency unit set and the first frequency spacing may be indicated by different fields in the first information. For example, a part of or all bits in the first field in the first information indicate the first frequency unit set, and a second field in the first information indicates the first frequency spacing.

In a possible implementation, a bit index of the first part of bits in the first field is associated with an index of a frequency unit in which a frequency range of a first uplink subband is located, and the first uplink subband is an uplink subband in the SBFD time unit; and/or a bit quantity of the first part of bits is M, and M is a positive integer.

In a possible implementation, the first part of bits includes: M bits starting from a most significant bit and spanning from a high-order bit to a low-order bit in the first field; or M bits starting from a least significant bit and spanning from a low-order bit to a high-order bit in the first field.

In the foregoing implementation, relative locations of the first part of bits in the first field are defined. In this way, the network side may not need to separately indicate the locations to the first communication apparatus. This can help reduce a quantity of interactions between the first communication apparatus and the network side, and help the first communication apparatus determine the first part of bits from the first information.

In a possible implementation, the bit quantity of the first part of bits is one of the following: a quantity of frequency units in which the frequency range of the first uplink subband is located; or

$$\left\lceil \log_2\left(N_{RB}^{UL,Subband}\left(N_{RB}^{UL,Subband}+1\right)/2\right)\right\rceil ; \text{ or } \left\lceil \log_2\left(N_{RB}^{UL,BWP}\left(N_{RB}^{UL,BWP}+1\right)/2\right)\right\rceil , \text{ where}$$

$N_{RB}^{UL,Subband}$ represents a quantity of resource blocks included in the first uplink subband, $N_{RB}^{UL,BWP}$ represents a quantity of resource blocks included in an uplink bandwidth part, and the first uplink subband is an uplink subband in the SBFD time unit.

In a possible implementation, the second part of bits is one of the following: other bits; or at least one bit starting from a most significant bit and spanning from a high-order bit to a low-order bit in the other bits; or at least one bit starting from a least significant bit and spanning from a low-order bit to a high-order bit in the other bits, where the other bits are bits other than the first part of bits in the first field.

In a possible implementation, a bit quantity of the second part of bits is one of the following:

$$N_{RBG} - N_{RBG}^{UL,subband} ; \text{ or}$$

$$\left\lceil \log_2\left(N_{RB}^{UL,BWP}\left(N_{RB}^{UL,BWP}+1\right)/2\right)\right\rceil - \left\lceil \log_2\left(N_{RB}^{UL,Subband}\left(N_{RB}^{UL,Subband}+1\right)/2\right)\right\rceil ; \text{ or}$$

$$N_{RBG} - \left\lceil \log_2\left(N_{RB}^{UL,BWP}\left(N_{RB}^{UL,BWP}+1\right)/2\right)\right\rceil ; \text{ or}$$

$$\max\left(\left\lceil \log_2\left(N_{RB}^{UL,BWP}\left(N_{RB}^{UL,BWP}+1\right)/2\right)\right\rceil, N_{RBG}\right) - M ; \text{ or a first value, where the first value is an integer}$$

greater than 0, where $N_{RBG}$ represents a quantity of resource block groups included in the uplink bandwidth part, $N_{RB}^{UL,Subband}$ represents the quantity of resource blocks included in the first uplink subband, $N_{RB}^{UL,BWP}$ represents the quantity of resource blocks included in the uplink bandwidth part, M is the bit quantity of the first part of bits, max represents taking a maximum value, and ⌈ ⌉ represents rounding up.

In a possible implementation, each bit in the first part of bits corresponds to one frequency unit in which the frequency range of the first uplink subband is located, a value of each bit indicates that the frequency unit belongs to or does not belong to the first frequency unit set, and the first uplink subband is an uplink subband in the SBFD time unit; or the first part of bits indicates a first resource indication value RIV, and the first RIV is used to determine the first frequency unit set.

In a possible implementation, the second part of bits indicates a second value, and the second value is used to determine the first frequency spacing from a first frequency spacing set; or the second part of bits carries the first frequency spacing. For example, the second value may indicate an index, a row number, or a column number of the first frequency spacing in the first frequency spacing set.

In a possible implementation, the second field indicates a third value, and the first frequency spacing is a frequency spacing corresponding to the third value in a time domain resource allocation TDRA table; and the TDRA table indicates a first time domain resource set and a first frequency spacing set, and the first time domain resource set is used to determine a time domain resource for transmitting the first type of signal.

In a possible implementation, the method further includes: sending first indication information, where the first indication information indicates a first time unit, the first time unit is an h$^{th}$ time unit used to transmit the first type of signal, h is a positive integer, and a type of the first type of time unit is a type of the first time unit. The first indication information may be some information in the first information. In this case, the first indication information is, for example, information corresponding to the second field, or the first indication information and the first information may be different information.

In a possible implementation, the first type of time unit is an SBFD time unit, and the second type of time unit is an uplink time unit.

In a possible implementation, an index of an i$^{th}$ frequency unit in the second frequency unit set is determined based on an index of a $j^{th}$ frequency unit in the first frequency unit set and the first frequency spacing; or an index of an $i^{th}$ frequency unit in the second frequency unit set is determined based on an index of a $j^{th}$ frequency unit in the first frequency unit set, the first frequency spacing, and a first parameter, where i and j are positive integers, and the first parameter is one of the following: the quantity of resource blocks included in the uplink bandwidth part; or the quantity of resource block groups included in the uplink bandwidth part; or the quantity of resource blocks included in the first uplink subband, where the first uplink subband is an uplink subband in the SBFD time unit.

In a possible implementation, a first frequency difference is associated with a second frequency difference, where the first frequency difference is a starting frequency difference or an ending frequency difference between an $i^{th}$ frequency unit and a $k^{th}$ frequency unit in the second frequency unit set, and the second frequency difference is a starting frequency difference or an ending frequency difference between a $j^{th}$ frequency unit and an $m^{th}$ frequency unit in the first frequency unit set; and/or a first quantity is associated with a second quantity, where the first quantity is a quantity of frequency units included in the second frequency unit set, and the second quantity is a quantity of frequency units included in the first frequency unit set, where i, j, m, and k are positive integers.

In a possible implementation, a bit quantity of the first field is one of the following: $N_{RBG}$ ; or

$$\left\lceil \log_2\left(N_{RB}^{UL,BWP}\left(N_{RB}^{UL,BWP}+1\right)/2\right)\right\rceil \quad ; \quad \text{or} \quad \left\lceil \log_2\left(N_{RB}^{UL,BWP}\left(N_{RB}^{UL,BWP}+1\right)/2\right)\right\rceil \quad ; \quad \text{or}$$

$$\left\lceil \log_2\left(N_{RB}^{UL,BWP}\left(N_{RB}^{UL,BWP}+1\right)/2\right)\right\rceil + N_x \qquad ; \qquad \text{or}$$

$$\max\left(\left\lceil \log_2\left(N_{RB}^{UL,BWP}\left(N_{RB}^{UL,BWP}+1\right)/2\right)\right\rceil, N_{RBG}\right) + 1 \qquad ; \qquad \text{or}$$

$$\max\left(\left\lceil \log_2\left(N_{RB}^{UL,BWP}\left(N_{RB}^{UL,BWP}+1\right)/2\right)\right\rceil + N_x, N_{RBG}\right) + 1 \text{ , where } N_{RBG} \text{ is the quantity of resource block}$$

groups included in the uplink bandwidth part, $N_x$ is the bit quantity of the second part of bits, $N_{RBG}$ represents the quantity of resource block groups included in the uplink bandwidth part, $N_{RB}^{UL,Subband}$ represents the quantity of resource blocks included in the first uplink subband, $N_{RB}^{UL,BWP}$ represents the quantity of resource blocks included in the uplink bandwidth part, M is the bit quantity of the first part of bits, max represents taking a maximum value, and $\lceil \ \rceil$ represents rounding up.

In a possible implementation, any frequency unit in the first frequency unit set or any frequency unit in the second frequency unit set is located in an uplink subband.

In a possible implementation, the first information further indicates a resource allocation type, and the resource allocation type indicates a type of a resource allocated for transmitting the first type of signal.

According to a third aspect, an embodiment of this application provides a communication method, and the method may be performed by a first communication apparatus. The first communication apparatus is, for example, a terminal device, or a software module or a hardware module (such as a chip) in the terminal device. The method includes: receiving second information, where the second information indicates a first frequency spacing, and the first frequency spacing indicates a quantity of frequency units that space a first frequency unit set and a second frequency unit set; receiving third information, where the third information indicates the first frequency unit set, and the first frequency unit set is a frequency unit in a first type of time unit; and sending a first type of signal on a part of or all first frequency units in the first frequency unit set and on a part of or all second frequency units in the second frequency unit set, where the second frequency unit set is determined based on the first frequency spacing and the first frequency unit set, the second frequency unit set is a frequency unit in a second type of time unit, the first type of time unit is one of an SBFD time unit and a non-SBFD time unit, the second type of time unit is the other of the SBFD time unit and the non-SBFD time unit, and the non-SBFD time unit includes an uplink time unit and/or a flexible time unit.

In this embodiment of this application, the first communication apparatus may respectively obtain the first frequency spacing and the first frequency unit set by using two pieces of information, and determine the second frequency unit set based on the first frequency spacing and the first frequency unit set. This provides a manner of transmitting a frequency resource for the first type of signal. In addition, the first frequency spacing is indicated by the second information, so that changes to the third information can be reduced, and costs of implementing the solution can be reduced.

In a possible implementation, a frequency range of at least one frequency unit in the second frequency unit set is different from a frequency range of any frequency unit in the first frequency unit set.

In a possible implementation, a second part of bits indicates a second value, and the second value is used to determine the first frequency spacing from a first frequency spacing set.

In a possible implementation, an index of an $i^{th}$ frequency unit in the second frequency unit set is determined based on an index of a $j^{th}$ frequency unit in the first frequency unit set and the first frequency spacing; or an index of an $i^{th}$ frequency unit in the second frequency unit set is determined based on an index of a $j^{th}$ frequency unit in the first frequency unit set, the first frequency spacing, and a first parameter, where i is a positive integer, and the first parameter is one of the following: a quantity of resource blocks included in an uplink bandwidth part; or a quantity of resource block groups included in the uplink bandwidth part; or a quantity of resource blocks included in a first uplink subband, where the first uplink subband is an uplink subband in the SBFD time unit; or a scale factor.

In a possible implementation, a first frequency difference is associated with a second frequency difference, where the first frequency difference is a starting frequency difference or an ending frequency difference between an $i^{th}$ frequency unit and a $k^{th}$ frequency unit in the second frequency unit set, and the second frequency difference is a starting frequency difference or an ending frequency difference between a $j^{th}$ frequency unit and an $m^{th}$ frequency unit in the first frequency unit set; and/or a first quantity is associated with a second quantity, where the first quantity is a quantity of frequency units included in the second frequency unit set, and the second quantity is a quantity of frequency units included in the first frequency unit set, where i, j, m, and k are positive integers.

In a possible implementation, the scale factor is a preconfigured or predefined value, or the scale factor is a first ratio, where the first ratio is a ratio of a quantity of resources included in a second uplink subband to a quantity of resources included in the uplink bandwidth part, and the second uplink subband is an uplink subband in the SBFD time unit.

In a possible implementation, the method further includes: receiving first indication information, where the first indication information indicates a first time unit, the first time unit is an $h^{th}$ time unit used to transmit the first type of signal, h is a positive integer, and a type of the first type of time unit is a type of the first time unit. The first indication information may be some information in first information. In this case, the first indication information is, for example, information corresponding to a second field, or the first indication information and the first information may be different information.

In a possible implementation, the third information further indicates a resource allocation type, and the resource allocation type indicates a type of a resource allocated for transmitting the first type of signal.

According to a fourth aspect, an embodiment of this application provides a communication method, and the method may be performed by a second communication apparatus. The second communication apparatus is, for example, a network device, or a software module or a hardware module (such as a chip) in the network device, and the network device is, for example, an access network apparatus or a core network apparatus. The method includes: sending second information, where the second information indicates a first frequency spacing, and the first frequency spacing indicates a quantity of frequency units that space a first frequency unit set and a second frequency unit set; sending third information, where the third information indicates the first frequency unit set, and the first frequency unit set is a frequency unit in a first type of time unit; and receiving a first type of signal on a part of or all first frequency units in the first frequency unit set and on a part of or all second frequency units in the second frequency unit set, where the second frequency unit set is a frequency unit in a second type of time unit, the first type of time unit is one of an SBFD time unit and a non-SBFD time unit, the second type of time unit is the other of the SBFD time unit and the non-SBFD time unit, the non-SBFD time unit includes an uplink time unit and/or a flexible time unit, and the first frequency spacing and the first frequency unit set are used to determine the second frequency unit set.

In a possible implementation, a frequency range of at least one frequency unit in the second frequency unit set is different from a frequency range of any frequency unit in the first frequency unit set.

In a possible implementation, a second part of bits indicates a second value, and the second value is used to determine the first frequency spacing from a first frequency spacing set.

In a possible implementation, an index of an $i^{th}$ frequency unit in the second frequency unit set is determined based on an index of a $j^{th}$ frequency unit in the first frequency unit set and the first frequency spacing; or an index of an $i^{th}$ frequency unit in the second frequency unit set is determined based on an index of a $j^{th}$ frequency unit in the first frequency unit set, the first frequency spacing, and a first parameter, where i is a positive integer, and the first parameter is one of the following: a quantity of resource blocks included in an uplink bandwidth part; or a quantity of resource block groups included in the uplink bandwidth part; or a quantity of resource blocks included in a first uplink subband, where the first uplink subband is an uplink subband in the SBFD time unit; or a scale factor.

In a possible implementation, a first frequency difference is associated with a second frequency difference, where the first frequency difference is a starting frequency difference or an ending frequency difference between an $i^{th}$ frequency unit and a $k^{th}$ frequency unit in the second frequency unit set, and the second frequency difference is a starting frequency difference or an ending frequency difference between a $j^{th}$ frequency unit and an $m^{th}$ frequency unit in the first frequency unit set; and/or a first quantity is associated with a second quantity, where the first quantity is a quantity of frequency units included in the second frequency unit set, and the second quantity is a quantity of frequency units included in the first frequency unit set, where i, j, m, and k are positive integers.

In a possible implementation, the scale factor is a preconfigured or predefined value, or the scale factor is a first ratio, where the first ratio is a ratio of a quantity of resources included in a second uplink subband to a quantity of resources included in the uplink bandwidth part, and the second uplink subband is an uplink subband in the SBFD time unit.

In a possible implementation, the method further includes: sending first indication information, where the first indication information indicates a first time unit, the first time unit is an $h^{th}$ time unit used to transmit the first type of signal, h is a positive integer, and a type of the first type of time unit is a type of the first time unit.

In a possible implementation, the third information further indicates a resource allocation type, and the resource allocation type indicates a type of a resource allocated for transmitting the first type of signal.

According to a fifth aspect, an embodiment of this application provides a communication method, and the method may be performed by a first communication apparatus. The first communication apparatus is, for example, a terminal device, or a software module or a hardware module (such as a chip) in the terminal device. The method includes: receiving fourth information, where the fourth information indicates a first frequency unit set, and the first frequency unit set is a frequency unit in a first type of time unit; and sending a first type of signal on a part of or all first frequency units in the first frequency unit set and on a part of or all second frequency units in a second frequency unit set, where the second frequency unit set is determined based on a first frequency spacing and the first frequency unit set, the first frequency spacing is preconfigured or predefined, the second frequency unit set is a frequency unit in a second type of time unit, the first type of time unit is one of an SBFD time unit and a non-SBFD time unit, the second type of time unit is the other of the SBFD time unit and the non-SBFD time unit, and the non-SBFD time unit includes an uplink time unit and/or a flexible time unit.

In this embodiment of this application, the first communication apparatus may obtain the first frequency unit set by using one piece of information, and determine the second frequency unit set based on the first frequency spacing and the first frequency unit set. This provides a manner of transmitting a frequency resource for the first type of signal. In addition, the first frequency spacing is preconfigured or predefined, so that interactions between the first communication apparatus and a network side can be reduced, and changes to the fourth information can be reduced.

In a possible implementation, a frequency range of at least one frequency unit in the second frequency unit set is different from a frequency range of any frequency unit in the first frequency unit set.

In a possible implementation, an index of an $i^{th}$ frequency unit in the second frequency unit set is determined based on an index of a $j^{th}$ frequency unit in the first frequency unit set and the first frequency spacing; or an index of an $i^{th}$ frequency unit in the second frequency unit set is determined based on an index of a $j^{th}$ frequency unit in the first frequency unit set, the first frequency spacing, and a first parameter, where i is a positive integer, and the first parameter is one of the following: a quantity of resource blocks included in an uplink bandwidth part; or a quantity of resource block groups included in the uplink bandwidth part; or a quantity of resource blocks included in a first uplink subband, where the first uplink subband is an uplink subband in the SBFD time unit; or a scale factor.

In a possible implementation, a first frequency difference is associated with a second frequency difference, where the first frequency difference is a starting frequency difference or an ending frequency difference between an $i^{th}$ frequency unit and a $k^{th}$ frequency unit in the second frequency unit set, and the second frequency difference is a starting frequency difference or an ending frequency difference between a $j^{th}$ frequency unit and an $m^{th}$ frequency unit in the first frequency unit set; and/or a first quantity is associated with a second quantity, where the first quantity is a quantity of frequency units included in the second frequency unit set, and the second quantity is a quantity of frequency units included in the first frequency unit set, where i, j, m, and k are positive integers.

In a possible implementation, the scale factor is a preconfigured or predefined value, or the scale factor is a first ratio, where the first ratio is a ratio of a quantity of resources included in a second uplink subband to a quantity of resources included in the uplink bandwidth part, and the second uplink subband is an uplink subband in the SBFD time unit.

In a possible implementation, the method further includes: receiving first indication information, where the first indication information indicates a $t^{th}$ time unit, the $t^{th}$ time unit is a $t^{th}$ time unit used to transmit the first type of signal, t is a positive integer, and a type of the first type of time unit is a type of the $t^{th}$ time unit.

In a possible implementation, the fourth information further indicates a resource allocation type, and the resource allocation type indicates a type of a resource allocated for transmitting the first type of signal.

According to a sixth aspect, an embodiment of this application provides a communication method, and the method may be performed by a second communication apparatus. The second communication apparatus is, for example, a network device, or a software module or a hardware module (such as a chip) in the network device. The method includes: sending fourth information, where the fourth information indicates a first frequency unit set, and the first frequency unit set is a frequency unit in a first type of time unit; and sending a first type of signal on a part of or all first frequency units in the first frequency unit set and on a part of or all second frequency units in a second frequency unit set, where a first frequency spacing is preconfigured or predefined, the second frequency unit set is a frequency unit in a second type of time unit, the first type of time unit is one of an SBFD time unit and a non-SBFD time unit, the second type of time unit is the other of the SBFD time unit and the non-SBFD time unit, the non-SBFD time unit includes an uplink time unit and/or a flexible time unit, and the first frequency spacing and the first frequency unit set are used to determine the second frequency unit set.

In a possible implementation, a frequency range of at least one frequency unit in the second frequency unit set is different from a frequency range of any frequency unit in the first frequency unit set.

In a possible implementation, an index of an $i^{th}$ frequency unit in the second frequency unit set is determined based on an index of a $j^{th}$ frequency unit in the first frequency unit set and the first frequency spacing; or an index of an $i^{th}$ frequency unit in the second frequency unit set is determined based on an index of a $j^{th}$ frequency unit in the first frequency unit set, the first frequency spacing, and a first parameter, where i is a positive integer, and the first parameter is one of the following: a quantity of resource blocks included in an uplink bandwidth part; or a quantity of resource block groups included in the uplink bandwidth part; or a quantity of resource blocks included in a first uplink subband, where the first uplink subband is an uplink subband in the SBFD time unit; or a scale factor.

In a possible implementation, a first frequency difference is associated with a second frequency difference, where the first frequency difference is a starting frequency difference or an ending frequency difference between an $i^{th}$ frequency unit and a $k^{th}$ frequency unit in the second frequency unit set, and the second frequency difference is a starting frequency difference or an ending frequency difference between a $j^{th}$ frequency unit and an $m^{th}$ frequency unit in the first frequency unit set; and/or a first quantity is associated with a second quantity, where the first quantity is a quantity of frequency units included in the second frequency unit set, and the second quantity is a quantity of frequency units included in the first frequency unit set, where i, j, m, and k are positive integers.

In a possible implementation, the scale factor is a preconfigured or predefined value, or the scale factor is a first ratio, where the first ratio is a ratio of a quantity of resources included in a second uplink subband to a quantity of resources included in the uplink bandwidth part, and the second uplink subband is an uplink subband in the SBFD time unit.

In a possible implementation, the method further includes: sending first indication information, where the first indication information indicates a first time unit, the first time unit is an $h^{th}$ time unit used to transmit the first type of signal, h is a positive integer, and a type of the first type of time unit is a type of the first time unit.

In a possible implementation, the fourth information further indicates a resource allocation type, and the resource allocation type indicates a type of a resource allocated for transmitting the first type of signal.

According to a seventh aspect, an embodiment of this application provides a communication method, and the method may be performed by a first communication apparatus. The first communication apparatus is, for example, a terminal device, or a software module or a hardware module (such as a chip) in the terminal device. The method includes: receiving fifth information, where the fifth information indicates a first frequency unit set, and the first frequency unit set is a frequency unit in a first type of time unit; and sending a first type of signal on a part of or all first frequency units in the first frequency unit set and on a part of or all second frequency units in a second frequency unit set, where the second frequency unit set is determined based on the fifth information, the second frequency unit set is a frequency unit in a second type of time unit, the first type of time unit is one of an SBFD time unit and a non-SBFD time unit, the second type of time unit is the other of the SBFD time unit and the non-SBFD time unit, and the non-SBFD time unit includes an uplink time unit and/or a flexible time unit.

In this embodiment of this application, the first communication apparatus may obtain the first frequency unit set by using one piece of information, and determine the second frequency unit set based on the information. This provides a manner of transmitting a frequency resource for the first type of signal. In addition, the two frequency unit sets can be determined without the need of indicating additional content by using the information. This helps reduce a quantity of information exchanges and an amount of interaction between the first communication apparatus and a network side.

In a possible implementation, a first part of bits in the fifth information indicates the first frequency unit set, and the method further includes: performing cyclic shift on the first part of bits by a second frequency spacing, to obtain a third part of bits; and obtaining the second frequency unit set based on the third part of bits, where the second frequency spacing represents a quantity of bits by which cyclic shift is performed on the first part of bits.

In the foregoing implementation, the first communication apparatus may perform the cyclic shift operation on the first part of bits, to obtain the third part of bits indicating the second frequency unit set. In addition, without the fifth information indicating additional information, the first communication apparatus may determine two different frequency unit sets, so that frequency unit sets respectively corresponding to two types of time units are flexibly indicated without increasing network transmission load.

In a possible implementation, the second frequency spacing is indicated by a second part of bits in the fifth information, or is preconfigured or predefined, or is indicated by sixth information, where the sixth information and the fifth information may be different information.

In a possible implementation, a first part of bits in the fifth information indicates the first frequency unit set, and the method further includes: performing a padding operation on the first part of bits, to obtain a fourth part of bits; and determining the second frequency unit set based on the fourth part of bits.

In the foregoing implementation, the first communication apparatus may perform the padding operation on the first part of bits, to obtain the fourth part of bits indicating the second frequency unit set, which is simple. In addition, without the fifth information indicating additional information, the first communication apparatus may determine two different frequency unit sets, so that frequency unit sets respectively corresponding to two types of time units are flexibly indicated without increasing network transmission load.

According to an eighth aspect, an embodiment of this application provides a communication method, and the method may be performed by a second communication apparatus. The second communication apparatus is, for example, a network device, or a software module or a hardware module (such as a chip) in the network device. The method includes: sending fifth information, where the fifth information indicates a first frequency unit set, and the first frequency unit set is a frequency unit in a first type of time unit; and sending a first type of signal on a part of or all first frequency units in the first frequency unit set and on a part of or all second frequency units in a second frequency unit set, where the second frequency unit set is a frequency unit in a second type of time unit, the first type of time unit is one of an SBFD time unit and a non-SBFD time unit, the second type of time unit is the other of the SBFD time unit and the non-SBFD time unit, the non-SBFD time unit includes an uplink time unit and/or a flexible time unit, and the fifth information is used to determine the second frequency unit set.

In a possible implementation, a first part of bits in the fifth information indicates the first frequency unit set, a third part of bits in the fifth information are used to determine the second frequency unit set, the third part of bits are obtained by performing cyclic shift on the first part of bits by a second frequency spacing, and the second frequency spacing indicates a quantity of bits by which cyclic shift is performed on the first part of bits.

In a possible implementation, the second frequency spacing is indicated by a second part of bits in the fifth information, or is preconfigured or predefined, or is indicated by sixth information, where the sixth information and the fifth information may be different information.

In a possible implementation, a first part of bits in the fifth information indicate the first frequency unit set, a fourth part of bits in the fifth information are used to determine the second frequency unit set, and the fourth part of bits are obtained by performing a padding operation on the first part of bits.

According to a ninth aspect, an embodiment of this application provides a communication system. The communication system includes the first communication apparatus in any one of the first aspect and the possible implementations and the second communication apparatus in any one of the second aspect and the possible implementations; or the first communication apparatus in any one of the third aspect and the possible implementations and the second communication apparatus in any one of the fourth aspect and the possible implementations; or the first communication apparatus in any one of the fifth aspect and the possible implementations and the second communication apparatus in any one of the sixth aspect and the possible implementations; or the first communication apparatus in any one of the seventh aspect and the possible implementations and the second communication apparatus in any one of the eighth aspect and the possible implementations.

According to a tenth aspect, an embodiment of this application provides a communication apparatus. The communication apparatus may be the first communication apparatus in any one of the first aspect and the possible implementations, or a software module or a hardware module (such as a chip) in the first communication apparatus. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the transceiver module is configured to: receive first information under control of the processing module, where the first information indicates a first frequency unit set and a first frequency spacing, the first frequency spacing indicates a quantity of frequency units that space the first frequency unit set and a second frequency unit set, and the first frequency unit set is a frequency unit in a first type of time unit; and send a first type of signal on a part of or all first frequency units in the first frequency unit set and on a part of or all second frequency units in the second frequency unit set under control of the processing module, where the second frequency unit set is determined based on the first frequency spacing and the first frequency unit set, the second frequency unit set is a frequency unit in a second type of time unit, the first type of time unit is one of a subband full-duplex SBFD time unit and a non-SBFD time unit, the second type of time unit is the other of the subband full-duplex SBFD time unit and the non-SBFD time unit, and the non-SBFD time unit includes an uplink time unit and/or a flexible time unit.

The communication apparatus may further implement any one of the possible implementations in the first aspect, and details are not described herein again.

According to an eleventh aspect, an embodiment of this application provides a communication apparatus. The communication apparatus may be the second communication apparatus in any one of the second aspect and the possible implementations, or a software module or a hardware module (such as a chip) in the second communication apparatus. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module is configured to: send first information under control of the processing module, where the first information indicates a first frequency unit set and a first frequency spacing, the first frequency spacing indicates a quantity of frequency units that space the first frequency unit set and a second frequency unit set, and the first frequency unit set is a frequency unit in a first type of time unit; and receive a first type of signal on a part of or all first frequency units in the first frequency unit set and on a part of or all second frequency units in the second frequency unit set, where the second frequency unit set is a frequency unit in a second type of time unit, the first type of time unit is one of a subband full-duplex SBFD time unit and a non-SBFD time unit, the second type of time unit is the other of the subband full-duplex SBFD time unit and the non-SBFD time unit, the non-SBFD time unit includes an uplink time unit and/or a flexible time unit, and the first frequency unit set and the first frequency spacing are used to determine the second frequency unit set.

The communication apparatus may further implement any one of the possible implementations in the second aspect, and details are not described herein again.

According to a twelfth aspect, an embodiment of this application provides a communication apparatus. The communication apparatus may be the first communication apparatus in any one of the third aspect and the possible implementations, or a software module or a hardware module (such as a chip) in the first communication apparatus. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, the transceiver module is configured to: receive second information under control of the processing module, where the second information indicates a first frequency spacing, and the first frequency spacing indicates a quantity of frequency units that space a first frequency unit set and a second frequency unit set; receive third information, where the third information indicates the first frequency unit set, and the first frequency unit set is a frequency unit in a first type of time unit; and send a first type of signal on a part of or all first frequency units in the first frequency unit set and on a part of or all second frequency units in the second frequency unit set, where the second frequency unit set is determined based on the first frequency spacing and the first frequency unit set, the second frequency unit set is a frequency unit in a second type of time unit, the first type of time unit is one of an SBFD time unit and a non-SBFD time unit, the second type of time unit is the other of the SBFD time unit and the non-SBFD time unit, and the non-SBFD time unit includes an uplink time unit and/or a flexible time unit.

The communication apparatus may further implement any one of the possible implementations in the third aspect, and details are not described herein again.

According to a thirteenth aspect, an embodiment of this application provides a communication apparatus. The communication apparatus may be the second communication apparatus in any one of the fourth aspect and the possible implementations, or a software module or a hardware module (such as a chip) in the second communication apparatus. The communication apparatus includes a corresponding means (means) or module configured to perform the fourth aspect or any possible implementation. For example, the communication apparatus includes a processing module (sometimes also referred to as a processing unit) and a transceiver module (sometimes also referred to as a transceiver unit).

For example, the transceiver module is configured to: send second information under control of the processing module, where the second information indicates a first frequency spacing, and the first frequency spacing indicates a quantity of frequency units that space a first frequency unit set and a second frequency unit set; send third information, where the third information indicates the first frequency unit set, and the first frequency unit set is a frequency unit in a first type of time unit; and receive a first type of signal on a part of or all first frequency units in the first frequency unit set and on a part of or all second frequency units in the second frequency unit set, where the second frequency unit set is a frequency unit in a second type of time unit, the first type of time unit is one of an SBFD time unit and a non-SBFD time unit, the second type of time unit is the other of the SBFD time unit and the non-SBFD time unit, the non-SBFD time unit includes an uplink time unit and/or a flexible time unit, and the first frequency spacing and the first frequency unit set are used to determine the second frequency unit set.

The communication apparatus may further implement any one of the possible implementations in the fourth aspect, and details are not described herein again.

According to a fourteenth aspect, an embodiment of this application provides a communication apparatus. The communication apparatus may be the first communication apparatus in any one of the fifth aspect and the possible implementations, or a software module or a hardware module (such as a chip) in the first communication apparatus. The communication apparatus includes a corresponding means (means) or module configured to perform the fifth aspect or any possible implementation. For example, the communication apparatus includes a processing module (sometimes also referred to as a processing unit) and a transceiver module (sometimes also referred to as a transceiver unit).

For example, the transceiver module is configured to: receive fourth information under control of the processing module, where the fourth information indicates a first frequency unit set, and the first frequency unit set is a frequency unit in a first type of time unit; and send a first type of signal on a part of or all first frequency units in the first frequency unit set and on a part of or all second frequency units in a second frequency unit set, where the second frequency unit set is determined based on a first frequency spacing and the first frequency unit set, the first frequency spacing is preconfigured or predefined, the second frequency unit set is a frequency unit in a second type of time unit, the first type of time unit is one of an SBFD time unit and a non-SBFD time unit, the second type of time unit is the other of the SBFD time unit and the non-SBFD time unit, and the non-SBFD time unit includes an uplink time unit and/or a flexible time unit.

The communication apparatus may further implement any one of the possible implementations in the fifth aspect, and details are not described herein again.

According to a fifteenth aspect, an embodiment of this application provides a communication apparatus. The communication apparatus may be the second communication apparatus in any one of the sixth aspect and the possible implementations, or a software module or a hardware module (such as a chip) in the second communication apparatus. The communication apparatus includes a corresponding means (means) or module configured to perform the sixth aspect or any possible implementation. For example, the communication apparatus includes a processing module (sometimes also referred to as a processing unit) and a transceiver module (sometimes also referred to as a transceiver unit).

For example, the transceiver module is configured to: send fourth information under control of the processing module, where the fourth information indicates a first frequency unit set, and the first frequency unit set is a frequency unit in a first type of time unit; and send a first type of signal on a part of or all first frequency units in the first frequency unit set and on a part of or all second frequency units in a second frequency unit set, where a first frequency spacing is preconfigured or predefined, the second frequency unit set is a frequency unit in a second type of time unit, the first type of time unit is one of an SBFD time unit and a non-SBFD time unit, the second type of time unit is the other of the SBFD time unit and the non-SBFD time unit, the non-SBFD time unit includes an uplink time unit and/or a flexible time unit, and the first frequency spacing and the first frequency unit set are used to determine the second frequency unit set.

The communication apparatus may further implement any one of the possible implementations in the sixth aspect, and details are not described herein again.

According to a sixteenth aspect, an embodiment of this application provides a communication apparatus. The communication apparatus may be the first communication apparatus in any one of the seventh aspect and the possible implementations, or a software module or a hardware module (such as a chip) in the first communication apparatus. The communication apparatus includes a corresponding means (means) or module configured to perform the seventh aspect or any possible implementation. For example, the communication apparatus includes a processing module (sometimes also referred to as a processing unit) and a transceiver module (sometimes also referred to as a transceiver unit).

For example, the transceiver module is configured to: receive fifth information under control of the processing module, where the fifth information indicates a first frequency unit set, and the first frequency unit set is a frequency unit in a first type of time unit; and send a first type of signal on a part of or all first frequency units in the first frequency unit set and on a part of or all second frequency units in a second frequency unit set, where the second frequency unit set is determined based on the fifth information, the second frequency unit set is a frequency unit in a second type of time unit, the first type of time unit is one of an SBFD time unit and a non-SBFD time unit, the second type of time unit is the other of the SBFD time unit and the non-SBFD time unit, and the non-SBFD time unit includes an uplink time unit and/or a flexible time unit.

The communication apparatus may further implement any one of the possible implementations in the seventh aspect, and details are not described herein again.

According to a seventeenth aspect, an embodiment of this application provides a communication apparatus. The communication apparatus may be the second communication apparatus in any one of the eighth aspect and the possible implementations, or a software module or a hardware module (such as a chip) in the second communication apparatus. The communication apparatus includes a corresponding means (means) or module configured to perform the eighth aspect or any possible implementation. For example, the communication apparatus includes a processing module (sometimes also referred to as a processing unit) and a transceiver module (sometimes also referred to as a transceiver unit).

For example, the transceiver module is configured to: send fifth information under control of the processing module, where the fifth information indicates a first frequency unit set, and the first frequency unit set is a frequency unit in a first type of time unit; and send a first type of signal on a part of or all first frequency units in the first frequency unit set and on a part of or all second frequency units in a second frequency unit set, where the second frequency unit set is a frequency unit in a second type of time unit, the first type of time unit is one of an SBFD time unit and a non-SBFD time unit, the second type of time unit is the other of the SBFD time unit and the non-SBFD time unit, the non-SBFD time unit includes an uplink time unit and/or a flexible time unit, and the fifth information is used to determine the second frequency unit set.

The communication apparatus may further implement any one of the possible implementations in the eighth aspect, and details are not described herein again.

According to an eighteenth aspect, an embodiment of this application provides a communication apparatus, including a processor and a communication interface. The communication interface is configured to: receive a signal from an apparatus other than the communication apparatus and transmit the signal to the processor, or send a signal from the processor to an apparatus other than the communication apparatus. The processor implements the method according to any one of the first aspect to the eighth aspect and the possible implementations through a logic circuit or by executing code instructions.

Optionally, the communication apparatus further includes other components, for example, an antenna and an input/output module. These components may be hardware, software, or a combination of software and hardware.

According to a nineteenth aspect, an embodiment of this application provides a communication apparatus, including a processor and an interface circuit. The interface circuit is configured to: receive a signal from an apparatus other than the communication apparatus and transmit the signal to the processor, or send a signal from the processor to an apparatus other than the communication apparatus. The processor is configured to implement the method according to any one of the first aspect to the eighth aspect and the possible implementations through a logic circuit or by executing code instructions.

In a specific implementation process, the communication apparatus may be a chip or a communication device. For example, the communication apparatus may be a wireless communication device, that is, a computer device that supports a wireless communication function. Specifically, the communication apparatus may be a terminal such as a smartphone, or may be a radio access network device such as a base station. The system chip may also be referred to as a system on chip (system on chip, SoC), or briefly referred to as a SoC chip. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In physical implementation, some or all chips of the communication chip may be integrated into the SoC chip. For example, the baseband processing chip is integrated into the SoC chip, but the radio frequency processing chip is not integrated into the SoC chip. The interface circuit may be a radio frequency processing chip in the wireless communication device.

In another implementation, the communication apparatus may be a part of device in the communication device, for example, an integrated circuit product like a system chip or a communication chip. The interface circuit may be an input/output interface, an interface circuit, an output circuit, an input circuit, a pin, a related circuit, or the like on the chip or the chip system. The processor may alternatively be embodied as a processing circuit or a logic circuit.

According to a twentieth aspect, an embodiment of this application provides a chip system. The chip system includes a processor and an interface. The processor is configured to invoke instructions from the interface and run the instruction, and when executing the instructions, the processor implements the method according to any one of the first aspect to the eighth aspect and the possible implementations.

According to a twenty-first aspect, an embodiment of this application provides a computer-readable storage medium. The computer-readable storage medium is configured to store a computer program or instructions. When the computer program or the instructions are run, the method according to any one of the first aspect to the eighth aspect and the possible implementations is implemented.

According to a twenty-second aspect, an embodiment of this application provides a computer program product including instructions. When the computer program product runs on a computer, the method according to any one of the first aspect to the eighth aspect and the possible implementations is implemented.

For beneficial effects of any one of the technical solutions in the second aspect, the fourth aspect, the sixth aspect, and the eighth aspect to the twenty-second aspect, refer to the beneficial effects of the corresponding technical solutions in the first aspect, the third aspect, the fifth aspect, and the seventh aspect. No repeated description is provided herein.

BRIEF DESCRIPTION OF DRAWINGS

FIG. 1 is a diagram of a resource structure in TDD;
FIG. 2 is a diagram of a resource structure in SBFD;
FIG. 3 is another diagram of a resource structure in SBFD;
FIG. 4 is still another diagram of a resource structure in SBFD;
FIG. 5 is a diagram of a communication system according to an embodiment of this application;
FIG. 6 is a diagram of a communication method according to an embodiment of this application;
FIG. 7 is a diagram of a first uplink subband according to an embodiment of this application;
FIG. 8 is a diagram of a first part of bits according to an embodiment of this application;
FIG. 9A is a diagram of a first frequency unit set according to an embodiment of this application;
FIG. 9B is another diagram of a first frequency unit set according to an embodiment of this application;
FIG. 10 is a diagram of a first frequency unit set and a second frequency unit set according to an embodiment of this application;
FIG. 11 is another diagram of a first frequency unit set and a second frequency unit set according to an embodiment of this application;
FIG. 12 is still another diagram of a first frequency unit set and a second frequency unit set according to an embodiment of this application;
FIG. 13 is a diagram of another communication method according to an embodiment of this application;
FIG. 14 is a diagram of still another communication method according to an embodiment of this application;
FIG. 15 is a diagram of yet another communication method according to an embodiment of this application;
FIG. 16 is a diagram of a structure of a communication apparatus according to an embodiment of this application; and
FIG. 17 is a diagram of a structure of a communication apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.

1. A terminal device is a device with a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect persons, objects, machines, and the like, and may be widely used in various scenarios, for example, including but not limited to terminal devices in scenarios such as the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.

2. A network device (or may be referred to as a network apparatus) includes, for example, an access network apparatus (or referred to as an access network device or an access network element) and/or a core network element (or referred to as a core network device or a core network element).

(1) The access network apparatus is a device with a wireless transceiver function, and is configured to communicate with the terminal device. The access network apparatus includes but is not limited to a base station (BTS, NodeB, eNodeB/eNB, or gNodeB/gNB) or a transmission reception point (transmission reception point, TRP) in the foregoing communication system, a base station evolved after the 3rd generation partnership project (3rd generation partnership project, 3GPP), an access node in a wireless fidelity (wireless fidelity, Wi-Fi) system, a wireless relay node, a wireless backhaul node, a satellite, an uncrewed aerial vehicle, or the like. The base station may be a macro base station, a micro base station, a pico base station, a small cell, a relay station, or the like. A plurality of base stations may support networks of a same access technology mentioned above, or may support networks of different access technologies mentioned above. The base station may include one or more co-sited or non-co-sited transmission reception points. Alternatively, the access network apparatus may be a radio controller, a central unit (central unit, CU) that may alternatively be referred to as an aggregation unit, and/or a distributed unit (distributed unit, DU) in a cloud radio access network (cloud radio access network, C(R)AN) scenario. Alternatively, the access network apparatus may be a server, a wearable device, a vehicle-mounted device, or the like. For example, an access network apparatus in the vehicle-to-everything (vehicle-to-everything, V2X) technology may be a roadside unit (road side unit, RSU). An example in which the access network apparatus is the base station is used below for description. A plurality of access network apparatuses in the communication system may be base stations of a same type, or may be base stations of different types. The base station may communicate with the terminal device, or may communicate with the terminal device via a relay station. The terminal device may communicate with the plurality of base stations in different access technologies.

(2) The core network apparatus is configured to implement at least one of functions such as mobility management, data processing, session management, and policy and charging. Names of devices that implement a core network function in systems using different access technologies may be different. This is not limited in embodiments of this application. Using a fifth generation (fifth generation, 5G) system as an example, the core network apparatus includes an access and mobility management function (access and mobility management function, AMF), a session management function (session management function, SMF), a PCF, a user plane function (user plane function, UPF), or the like.

3. An apparatus may be a software module, a hardware module (such as a chip), a single device, or an apparatus integrating a plurality of devices.

4. A time unit may be a slot, a symbol, a subframe, a half-frame, a frame, a mini-subframe, a mini-slot, or a transmission occasion (transmission occasion, TO). This is not limited in embodiments of this application. The time unit may be used as a granularity (or unit) of a time domain resource.

5. SBFD time unit: A frequency resource in the SBFD time unit may be used for uplink transmission and downlink transmission. A frequency domain resource used for uplink transmission may be referred to as an uplink frequency domain resource, and a resource used for downlink transmission may be referred to as a downlink frequency domain resource.

6. Non-SBFD time unit: A frequency resource corresponding to one of symbols (symbol) included in the non-SBFD time unit may be used for downlink transmission, uplink transmission, or a guard period. The symbol in the non-SBFD time unit may include an uplink symbol and/or a flexible symbol. For example, in the non-SBFD time unit, all symbols are uplink symbols or flexible symbols, or some symbols are uplink symbols and the other symbols are flexible symbols. The uplink symbol may be used for uplink transmission, and the downlink symbol may be used for downlink transmission. The flexible symbol may be selectively used for uplink transmission, downlink transmission, or a guard period. For example, the flexible symbol may be used for uplink transmission, downlink transmission, or a guard period based on an indication of control signaling.

The non-SBFD time unit may include an uplink time unit and/or a flexible time unit. The uplink time unit may be used for uplink transmission. For example, the uplink time unit may include an uplink symbol, or the uplink time unit is an uplink symbol. The flexible time unit may be used for uplink transmission or downlink transmission. For example, the flexible time unit includes a flexible symbol, or is an uplink symbol.

7. A frequency unit is, for example, a resource block (resource block, RB) or a resource block group (resource block group, RBG). The RBG may be a set of contiguous virtual resource blocks (virtual resource block, VRB). The frequency unit may be a granularity (or unit) of a frequency domain resource (or a frequency resource).
8. A symbol, short for a time domain symbol, may also be referred to as orthogonal frequency division multiplexing (orthogonal frequency division multiplexing, OFDM). It should be noted that the time domain symbol may also be named in combination with other multiple access modes. This is not limited in embodiments of this application. For different subcarrier spacings, time domain symbol lengths may be different. A symbol in a slot may include at least one of a downlink symbol, an uplink symbol, an SBFD symbol, and a flexible symbol.
9. A subband may be a part of frequency band in a carrier, and the subband may include one or more contiguous frequency units in frequency domain. In embodiments of this application, the subband may also be used as an example of a frequency resource. A subband used for uplink transmission in an SBFD time unit may be referred to as an uplink subband.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

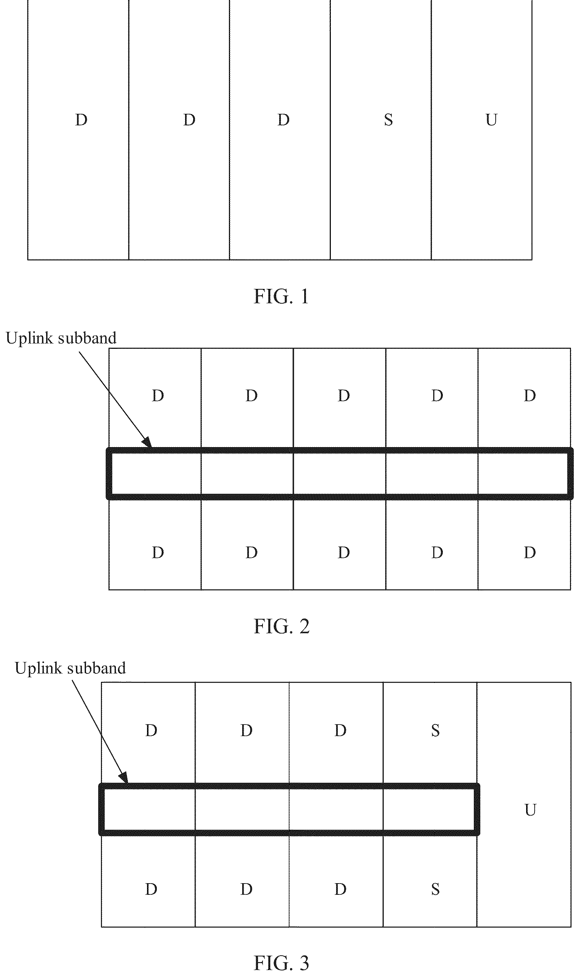

FIG. 1 is a diagram of a resource structure in time division duplexing (time division duplexing, TDD). As shown in FIG. 1, a resource in TDD includes three downlink slots (represented by D in FIG. 1), one special slot (represented by S in FIG. 1), and one uplink slot (represented by U in FIG. 1). The resource structure shown in FIG. 1 may be simplified as DDDSU. One downlink slot, one uplink slot, or one special slot includes a plurality of symbols. The special slot includes at least a flexible symbol.
In TDD, the downlink slot is used for downlink transmission, the uplink slot is used for uplink transmission, and the special slot may be flexibly used for uplink or downlink transmission. It can be learned from FIG. 1 that resources used for uplink transmission are fewer than resources used for downlink transmission, resulting in poorer coverage and a longer delay of uplink transmission.
Therefore, a solution, that is, SBFD is provided. In SBFD, a downlink symbol in a downlink slot may be divided into one or more downlink subbands and one or more uplink subbands. The one or more uplink subbands may be used for uplink transmission. In this way, compared with TDD, SBFD may include more resources used for uplink transmission, thereby helping improve coverage of uplink transmission and reduce a delay of uplink transmission. The following describes a possible resource structure in SBFD.
FIG. 2 is a diagram of a resource structure in SBFD. As shown in FIG. 2, a resource includes five downlink slots. The five downlink slots each may correspond to one or more uplink subbands, and these uplink subbands (shown by a thick block in the figure) may be used for uplink transmission. The resource structure shown in FIG. 2 may be simplified as XXXXX. X represents an SBFD slot. A frequency unit in the SBFD slot may be used for a plurality of types of transmission, for example, uplink transmission and downlink transmission.
FIG. 3 is another diagram of a resource structure in SBFD. As shown in FIG. 3, a resource includes three downlink slots, one special slot, and one uplink slot. The three downlink slots and the one special slot each may correspond to one or more uplink subbands, and these uplink subbands (shown by a thick block in the figure) may be used for uplink transmission. The resource structure shown in FIG. 3 may be simplified as XXXXU.

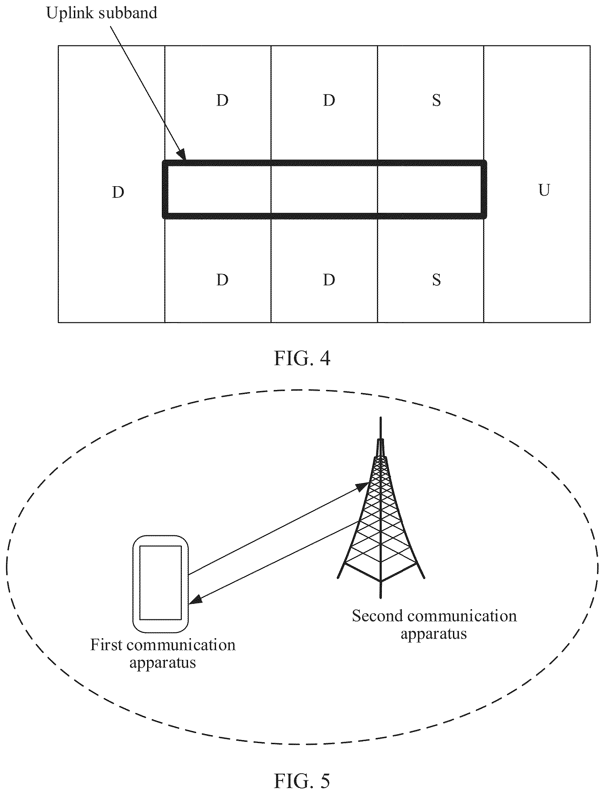

FIG. 4 is still another diagram of a resource structure in SBFD. As shown in FIG. 4, a resource includes three downlink slots, one special slot, and one uplink slot. Two downlink slots in the three downlink slots each may correspond to one or more uplink subbands, and the one special slot may also correspond to one or more uplink subbands. These uplink subbands (shown by a thick block in the figure) all may be used for uplink transmission. The resource structure shown in FIG. 4 may be simplified as DXXXU.

As described above, in SBFD, there may also be uplink subbands used for uplink transmission in the downlink slot and/or the special slot, and a part of or all of these uplink subbands may also be used to transmit a signal (for example, an uplink signal carried on a PUSCH). However, there is currently no corresponding solution to how to determine a frequency resource used to transmit a signal.

In view of this, embodiments of this application provide a communication solution. In the communication solution, a second communication apparatus (for example, a network apparatus, specifically, an access network apparatus) may indicate a first frequency unit set and a first frequency spacing by using one piece of information (for example, first information), and a first communication apparatus (for example, a terminal device) may determine a second frequency unit set based on the first frequency unit set and the first frequency spacing. The first frequency unit set and the second frequency unit set are frequency units used to transmit a first type of signal in different types of time units. In this way, a manner of determining a frequency resource for transmitting an uplink signal is provided.

The solution provided in embodiments of this application may be applied to a 5G communication system, for example, a new radio (new radio, NR) system, applied to 3GPP-related wireless communication, or applied to a future evolved mobile communication system or another similar communication system. This is not limited in embodiments of this application.

FIG. 5 is a diagram of a communication system according to an embodiment of this application. Alternatively, FIG. 5 may be considered as a diagram of a scenario to which an embodiment of this application is applicable. As shown in FIG. 5, the communication system includes a first communication apparatus and a second communication apparatus that communicate with each other.

For example, the first communication apparatus is a terminal device, or a software module or a hardware module (such as a chip) in the terminal device. For an implementation of the terminal device, refer to the foregoing description. For example, the second communication apparatus is a network device, or a software module or a hardware module (such as a chip) in the network device. For an implementation of the network device, refer to the foregoing description.

For example, the second communication apparatus may send a first signal to the first communication apparatus. Correspondingly, after receiving the first information, the first communication apparatus may send a second signal to the second communication apparatus. For example, when the first communication apparatus is the terminal device, and the second communication apparatus is the network device, a process in which the second communication apparatus sends the first signal to the first communication apparatus may be considered as downlink transmission, where the first signal may be considered as a downlink signal, and a process in which the first communication apparatus sends the second signal to the second communication apparatus may be considered as uplink transmission, where the second signal may be considered as an uplink signal.

It should be noted that, in FIG. 5, an example in which both a quantity of first communication apparatuses and a quantity of second communication apparatuses are 1 is used. Actually, the quantity of first communication apparatuses and the quantity of second communication apparatuses are not limited.

The following describes the method provided in embodiments of this application with reference to the accompanying drawings. All steps shown by dashed lines in embodiments of this application are optional steps. In embodiments of this application, a first communication apparatus is, for example, the first communication apparatus in FIG. 5, and a second communication apparatus is, for example, the second communication apparatus in FIG. 5.

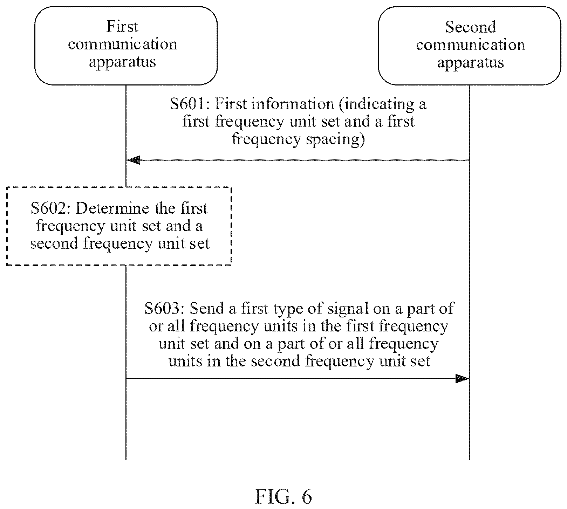

FIG. 6 is a diagram of a communication method according to an embodiment of this application.

S601: A second communication apparatus sends first information to a first communication apparatus. Correspondingly, the first communication apparatus receives the first information from the second communication apparatus.

For example, the first information is radio resource control (radio resource control, RRC) or downlink control information (downlink control information, DCI).

The first information may indicate a first frequency unit set. The first frequency unit set may be considered as a frequency resource (or a frequency domain resource) used to send a first type of signal. The first frequency unit set may be a continuous frequency resource, or may be a discontinuous frequency resource. The first frequency unit set may include one or more frequency units. For an implementation of the frequency unit, refer to the foregoing description.

The first type of signal may be a type (or kind) of signal. For example, the first type of signal is an uplink signal. Specifically, the first type of signal is, for example, an uplink signal carried on a PUSCH. In this case, the first type of signal may also be referred to as the PUSCH for short. For example, a type of the PUSCH may be any one of PUSCH (for example, single-slot PUSCH), PUSCH repetition type A (PUSCH repetition type A), PUSCH repetition type B (PUSCH repetition type B), transport block over multi-slot (transport block over multi-slot, TBoMS) PUSCH, or TBoMS PUSCH repetition. The type of the PUSCH is not specifically limited in this embodiment of this application. TBoMS PUSCH and TBoMS PUSCH repetition may be jointly simplified as TBoMS PUSCH w/ or w/o repetition.

The first frequency unit set may be a frequency unit in a first type of time unit. In other words, the first frequency unit set may be considered as a frequency unit used to send the first type of signal in the first type of time unit. The first type of time unit may be understood as a type of time unit, or may be understood as a type of a time unit. The first type of time unit may include one or more time units. A quantity of time units included in the first type of time unit is not specifically limited in this embodiment of this application. The first type of time unit may be an SBFD time unit or a non-SBFD time unit. The non-SBFD time unit includes, for example, an uplink time unit and/or a flexible time unit. For content of the SBFD time unit, the non-SBFD time unit, the uplink time unit, and the flexible time unit, refer to the foregoing descriptions.

In a possible design, when there are a plurality of time units used to transmit the first type of signal in the first type of time unit, the first frequency unit set may correspondingly include a first frequency unit subset in each of the plurality of time units, that is, the plurality of time units correspond to the plurality of first frequency unit subsets, where one first frequency unit subset corresponding to one time unit may be understood as a set of frequency units used to transmit the first type of signal in the time unit. The plurality of first frequency unit subsets corresponding to the plurality of time units may be referred to as a plurality of first frequency unit subsets for short. A first frequency unit subset in the plurality of first frequency unit subsets may include one or more frequency units. Optionally, frequency ranges of any two of the plurality of first frequency unit subsets may be the same.

For example, the plurality of time units in the first type of time unit include a slot 1 and a slot 2, and the first frequency unit set includes one first frequency unit subset in the slot 1 and one first frequency unit subset in the slot 2. Frequency ranges of the first frequency unit subset in the slot 1 and the first frequency unit subset in the slot 2 are the same. For example, the first frequency unit subset in the slot 1 includes a frequency unit 1 and a frequency unit 2, and the first frequency unit subset in the slot 2 also includes the frequency unit 1 and the frequency unit 2.

In addition to the first frequency unit set, the first information may further indicate a first frequency spacing. The first frequency spacing is a quantity of frequency units that space the first frequency unit set and a second frequency unit set, or may be understood as a frequency offset (offset) between the first frequency unit set and the second frequency unit set, or may be understood as a benchmark value (or a reference value) for determining the second frequency unit set based on the first frequency unit set. For example, in a case of the frequency unit being an RB, the first frequency spacing may be a quantity of RBs that space the first frequency unit set and the second frequency unit set; or in a case of the frequency unit being an RBG, the first frequency spacing may be a quantity of RBGs that space the first frequency unit set and the second frequency unit set.

For example, the first frequency spacing is a quantity of frequency units that space a $j^{th}$ frequency unit in the first frequency unit set and an $i^{th}$ frequency unit in the second frequency unit set. Both i and j are positive integers, and values of i and j may be the same or different. j may be any positive integer from 1 to e, and i may be any positive integer from 1 to u; or j is sequentially taken from 1 to e, and i is sequentially taken from 1 to u. e represents a quantity of frequency units included in the first frequency unit set, and u represents a quantity of frequency units included in the second frequency unit set.

The second frequency unit set may be considered as a frequency resource used to send the first type of signal. The second frequency unit set may be a continuous frequency resource, or may be a discontinuous frequency resource. The second frequency unit set may include one or more frequency units. For a meaning of the frequency unit, refer to the foregoing description.

A frequency range corresponding to the second frequency unit set is completely the same as a frequency range corresponding to the first frequency unit set. For example, the first frequency unit set includes a frequency unit 1 to a frequency unit 3, and the second frequency unit also includes the frequency unit 1 to the frequency unit 3.

Alternatively, a frequency range corresponding to the second frequency unit set is not completely the same as a frequency range corresponding to the first frequency unit set. For example, a frequency range of at least one frequency unit in the second frequency unit set is different from a frequency range of any frequency unit in the first frequency unit set. For example, the first frequency unit set includes a frequency unit 1 to a frequency unit 3, and the second frequency unit set includes the frequency unit 1, the frequency unit 2, the frequency unit 3, and a frequency unit 4, where the frequency unit 4 is different from any frequency unit in the first frequency unit set.

Alternatively, a frequency range corresponding to the second frequency unit set is completely different from a frequency range corresponding to the first frequency unit set. For example, a frequency range of any frequency unit in the second frequency unit set is different from a frequency range of a frequency unit in the first frequency unit set. For example, the first frequency unit set includes a frequency unit 2 and a frequency unit 4, and the second frequency unit set includes a frequency unit 1 and a frequency unit 3.

The second frequency unit set may be a frequency unit (or a resource) in a second type of time unit. In other words, the second frequency unit set may be considered as a frequency unit used to send the first type of signal in the second type of time unit.

The second type of time unit may be understood as a type of time unit, or may be understood as a type of a time unit. A type of the second type of time unit is different from a type of the first type of time unit. For example, the first type of time unit is an SBFD time unit and the second type of time unit is a non-SBFD time unit; or the first type of time unit is a non-SBFD time unit and the second type of time unit is an SBFD time unit.

In a possible design, when there are a plurality of time units used to transmit the first type of signal in the second type of time unit, the second frequency unit set may include a second frequency unit subset in each of the plurality of time units, that is, the plurality of time units correspond to the plurality of second frequency unit subsets, where one second frequency unit subset corresponding to one time unit may be understood as a set of frequency units used to transmit the first type of signal in the time unit. One second frequency unit subset may include one or more frequency units. Optionally, frequency ranges of any two of the plurality of second frequency unit subsets may be the same.

For example, the plurality of time units in the second type of time unit include a slot 0 and a slot 1, and the second frequency unit set includes one second frequency unit subset in the slot 0 and one second frequency unit subset corresponding to the slot 1. Frequency ranges of the second frequency unit subset in the slot 0 and the second frequency unit subset corresponding to the slot 1 are the same. For example, the second frequency unit subset in the slot 0 includes a frequency unit 3 and a frequency unit 4, and the second frequency unit subset in the slot 1 also includes the frequency unit 3 and the frequency unit 4.

The following describes a manner in which the first information indicates the first frequency unit set and the first frequency spacing.

**Manner 1: A same field (for example, a first field) in the first information indicates the first frequency unit set and the first frequency spacing.**

For example, the first information is DCI, and the first field is a frequency domain resource allocation (frequency domain resource allocation, FDRA) field; or the first information is RRC, and the first field is a frequency domain allocation (frequency domain allocation) field in a configured grant configuration (ConfiguredGrantConfig) information element in the RRC.

The first field may include a first part of bits and a second part of bits. The first part of bits indicates the first frequency unit set, and the second part of bits indicates the first frequency spacing.

The first part of bits may be M consecutive bits or M inconsecutive bits in the first field. The second part of bits may be Nx consecutive bits or Nx inconsecutive bits in the first field. This is not limited in this embodiment of this application. Both M and Nx are positive integers. The first part of bits and the second part of bits may be two parts of bits that do not overlap in the first field. For example, the first part of bits are the 1st to 5th bits in the first field, and the second part of bits are the 6th to 11th bits in the first field. Alternatively, the first part of bits and the second part of bits may be two parts of bits that overlap in the first field. For example, the first part of bits are the 1st to 6th bits in the first field, and the second part of bits are the 4th to 11th bits in the first field. Alternatively, the first part of bits and the second part of bits may be a completely same part of bits in the first field, and both the first part of bits and the second part of bits are the 6th to 11th bits in the first field.

The following describes a quantity of bits of the first field. The quantity of bits of the first field may include any one of A1 to A6, which is specifically described below.

A1. The quantity of bits of the first field is $N_{RBG}$. $N_{RBG}$ is a quantity of RBGs included in an uplink bandwidth part. The uplink bandwidth part may be, for example, an activated uplink bandwidth part used to transmit the first type of signal.

A2. $\left\lceil \log_2\left(N_{RB}^{UL,BWP}\left(N_{RB}^{UL,BWP}+1\right)/2\right)\right\rceil$ . $N_{RB}^{UL,BWP}$ represents a quantity of RBs included in an uplink bandwidth part, and $\lceil X\rceil$ represents rounding up X.

A3. $\left\lceil \log_2\left(N_{RB}^{UL,BWP}\left(N_{RB}^{UL,BWP}+1\right)/2\right)\right\rceil$ .

A4. $\left\lceil \log_2\left(N_{RB}^{UL,BWP}\left(N_{RB}^{UL,BWP}+1\right)/2\right)\right\rceil + N_x$ . $N_x$ is a bit quantity of the second part of bits.

A5. $\max\left(\left\lceil \log_2\left(N_{RB}^{UL,BWP}\left(N_{RB}^{UL,BWP}+1\right)/2\right)\right\rceil, N_{RBG}\right) + 1$ . max(X1, X2) represents taking a maximum value in X1 and X2.

A6. $\max\left(\left\lceil \log_2\left(N_{RB}^{UL,BWP}\left(N_{RB}^{UL,BWP}+1\right)/2\right)\right\rceil + N_x, N_{RBG}\right) + 1$ . $N_{RB}^{UL,Subband}$ represents a quantity of RBs included in a first uplink subband.

Certainly, in addition to A1 to A6, there may be another implementation of the quantity of bits of the first field. This is not specifically limited in this embodiment of this application.

After the quantity of bits of the first field is described, the following describes a possible implementation of the bit quantity (that is, a value of M) of the first part of bits by using an example. The bit quantity (that is, the value of M) of the first part of bits may be predefined or preconfigured in the second communication apparatus and/or the first communication apparatus, or the second communication apparatus may indicate a fourth value to the first communication apparatus, for example, a fourth value defined by using a protocol. Alternatively, the bit quantity of the first part of bits may be one of B1 to B3: Optionally, a value of the fourth value may be one of B1 to B3. The following describes B1 to B3 respectively.

B1. The bit quantity of the first part of bits is a quantity of frequency units in which a frequency range of the first uplink subband is located (or to which the frequency range of the first uplink subband belongs).

The SBFD time unit may include one or more uplink subbands, and the first uplink subband may be one of the one or more uplink subbands. The first uplink subband may include a positive integer quantity of frequency units. In this case, the quantity of frequency units in which the frequency range of the first uplink subband is located is the same as the quantity of frequency units included in the first uplink subband, that is, the quantity of the first part of bits is the quantity of frequency units included in the first uplink subband. Alternatively, the first uplink subband may include a non-positive integer quantity of frequency units, and the bit quantity of the first part of bits may be the quantity of frequency units in which the frequency range of the first uplink subband is located. For example, if the frequency range of the first uplink subband is located (or distributed) in five frequency units, the quantity of frequency units in which the frequency range of the first uplink subband is located may be 5.

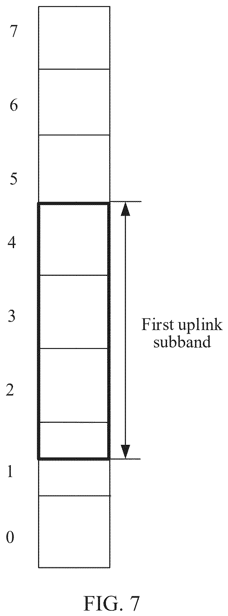

For example, FIG. 7 is a diagram of a first uplink subband according to an embodiment of this application. In FIG. 7, frequency units in which the frequency range of the first uplink subband is located include a frequency unit 1, a frequency unit 2, a frequency unit 3, and a frequency unit 4. Correspondingly, the bit quantity (that is, M) of the first part of bits is 4.

Optionally, B1 is applicable to a case in which a resource allocation type includes uplink resource allocation type 0 (uplink resource allocation type 0) or uplink resource allocation type 1 (uplink resource allocation type 1), and the resource allocation type indicates a type of a resource allocated for transmitting the first type of signal.

When the first type of time unit is an SBFD time unit, the first frequency unit set may be a part of or all frequency units included in one or more uplink subbands in the SBFD time unit, and generally, the quantity of frequency units corresponding to the first uplink subband is less than a quantity of frequency units included in the uplink BWP. Therefore, in B1, the bit quantity of the first part of bits is designed based on the quantity of frequency units corresponding to the first uplink subband, so that the bit quantity of the first part of bits can be reduced as much as possible when the first frequency unit set is indicated.

B2. The bit quantity of the first part of bits is $\left\lceil \log_2 \left( N_{RB}^{UL,Subband} \left( N_{RB}^{UL,Subband} + 1 \right) / 2 \right) \right\rceil$. $N_{RB}^{UL,Subband}$ represents the quantity of resource blocks included in the first uplink subband, and $\lceil x \rceil$ represents rounding up x.

Optionally, B2 is applicable to a case in which the resource allocation type includes uplink resource allocation type 1.

B2 is applicable to a case in which intra-slot frequency hopping (hop) and inter-slot frequency hopping do not exist, intra-slot frequency hopping exists, inter-slot frequency hopping exists, or intra-slot frequency hopping and inter-slot frequency hopping exist on a frequency resource for transmitting the first type of signal. In other words, B2 is applicable regardless of whether frequency hopping exists or does not exist on the frequency resource for transmitting the first type of signal.

B3. The bit quantity of the first part of bits is $\left\lceil \log_2 \left( N_{RB}^{UL,BWP} \left( N_{RB}^{UL,BWP} + 1 \right) / 2 \right) \right\rceil$. $N_{RB}^{UL,BWP}$ represents the quantity of resource blocks included in the uplink bandwidth part (bandwidth part, BWP).

Optionally, B3 is applicable to a case in which the resource allocation type includes uplink resource allocation type 1.

In addition, B3 is applicable regardless of whether frequency hopping (for example, intra-slot frequency hopping and/or inter-slot frequency hopping) exists or does not exist on a frequency resource for transmitting the first type of signal.

The foregoing describes a possible implementation of the bit quantity of the first part of bits. The following describes relative locations of the first part of bits in the first field. The relative locations of the first part of bits in the first field may meet any one of C1 to C3.

C1. A bit index of the first part of bits in the first field is associated with (or corresponds to) an index of a frequency unit in which the frequency range of the first uplink subband is located. The bit index may be used to determine a location of the first part of bits in the first field. For example, a bit index of one bit in the first part of bits in the first field may be a sequence number of the bit in the first field.

C1-1. A bit index of each bit in the first part of bits in the first field may be associated with indexes of at two frequency units in which the frequency range of the first uplink subband is located. Alternatively, a bit index of each bit in the first part of bits in the first field is determined based on indexes of at least two frequency units in which the frequency range of the first uplink subband is located.

For example, a bit index of a first bit may be a sum, a difference, a rounding-up result of an average value, or a rounding-down result of an average value of indexes of two frequency units in which the frequency range of the first uplink subband is located. The first bit is any bit in the first part of bits. The bit index of the first bit is a bit index of the first bit in the first field.

C1-2. Bit indexes of at least two bits in the first part of bits in the first field may be associated with an index of one frequency unit in which the frequency range of the first uplink subband is located. Alternatively, a bit index of at least two bit in the first part of bits in the first field is determined based on an index of one frequency unit in which the frequency range of the first uplink subband is located.

For example, a difference between bit indexes of the first bit and a second bit may be an index of one frequency unit in which the frequency range of the first uplink subband is located. Alternatively, a sum of bit indexes of the first bit and a second bit may be an index of one frequency unit in which the frequency range of the first uplink subband is located. The second bit is any bit other than the first bit in the first part of bits.

C1-3. A bit index of each bit in the first part of bits in the first field is associated with an index of one frequency unit in which the frequency range of the first uplink subband is located. Alternatively, a bit index of each bit in the first part of bits in the first field is determined based on an index of one frequency unit in which the frequency range of the first uplink subband is located.

The following describes the manner C1-3 by using an example in which the bit index of the first bit is associated with the index of the frequency unit in which the frequency range of the first uplink subband is located. For meanings of the first bit and the bit index of the first bit, refer to the foregoing descriptions.

That the bit index of the first bit is associated with the index of the frequency unit in which the frequency range of the first uplink subband is located may be understood as that the bit index of the first bit is determined based on the index of the frequency unit in which the frequency range of the first uplink subband is located. Optionally, a sequence number of the first bit in the first part of bits may be equal to a number (or a sequence number), in the first uplink subband, of the frequency unit in which the frequency range of the first uplink subband is located.

For example, the bit index of the first bit is the index of the frequency unit in which the frequency range of the first uplink subband is located, or a difference between the bit index of the first bit and the index of the frequency unit in which the frequency range of the first uplink subband is located is a seventh value. The seventh value may be preconfigured or predefined in the first communication apparatus and/or the second communication apparatus, or may be indicated by the second communication apparatus to the first communication apparatus. The seventh value is, for example, 0 or 1.

For example, the first field is 0 0 0 0 0 0 0 1 1 0 0 1 0 0 0 1 0 1, indexes of frequency units in which the frequency range of the first uplink subband is located are 6 to 10, and a bit index of the 1st bit in the first part of bits in the first field is 6. By analogy, the first part of bits are 1 1 0 0 1. In this embodiment of this application, an example in which the indexes of the bits are arranged from right to left of the first field is used for description.

C2. M bits starting from a most significant bit and spanning from a high-order bit to a low-order bit in the first field.

For example, if the value of M is 5, and the bits of the first field are 0 0 0 0 0 0 0 0 0 0 1 0 1 1 1 0 0 1, the first part of bits are 0 0 0 0 0. In this embodiment of this application, an example in which the most significant bit is a leftmost bit in the first field and a least significant bit is a rightmost bit is used.

C3. M bits starting from a least significant bit and spanning from a low-order bit to a high-order bit in the first field.

For example, if the value of M is 5, and the first field is 0 0 0 0 0 0 0 0 0 0 1 0 1 1 1 0 0 1, the first part of bits are 1 1 0 0 1.

After the related content of the first part of bits is described, the following first describes the bit quantity of the second part of bits.

The bit quantity $N_x$ of the second part of bits may be preconfigured or predefined in the second communication apparatus and/or the first communication apparatus, or indicated by the second communication apparatus to the first communication apparatus. For example, the second part of bits are $N_x$ bits in other bits. If a bit quantity of the other bits is $N_x$, the second part of bits are the other bits. If the bit quantity of the other bits is greater than $N_x$, the second part of bits are some bits in the other bits. For example, the second part of bits are $N_x$ bits starting from a most significant bit and spanning from a high-order bit to a low-order bit in the other bits, or $N_x$ bits starting from a least significant bit and spanning from a low-order bit to a high-order bit in the other bits. The other bits are bits other than the first part of bits in a second field. For example, the other bits are all bits other than the first part of bits in the second field, or the other bits are some bits other than the first part of bits in the second field.

The bit quantity $N_x$ of the second field varies with the quantity of bits of the first field and the bit quantity of the first part of bits, which is separately described below.

D1. If the quantity of bits of the first field is shown in A1, and the quantity of the first part of bits is shown in B1, the quantity of the second part of bits may be $N_{RBG} - N_{RBG}^{UL,subband}$.

For example, the second part of bits are $N_x$ bits starting from a least significant bit and spanning from a low-order bit to a high-order bit in the other bits, and $N_x = 0, 1, \ldots, N_{RBG} - N_{RBG}^{UL,subband}$.

For example, the second part of bits are $N_x$ bits starting from a most significant bit and spanning from a high-order bit to a low-order bit in the other bits, and $N_x = 0, 1, \ldots, N_{RBG} - N_{RBG}^{UL,subband}$.

Optionally, when $N_x$ = 0, it indicates that the first field does not indicate the first frequency spacing, or the first frequency spacing is 0.

For example, $N_{RBG}$ = 18, and $N_{RBG}^{UL,subband} = 5$. Indexes of frequency units in which the frequency range of the first uplink subband is located are 6 to 10. The first field is 0 0 0 0 0 0 011001000101.

In the manner shown in C1, the first information is the 7th to 11th bits in the first field, that is, 11001. The other bits include the 1st to 6th bits and the 12th to 18th bits in the first field, that is, 0000000000101. If $N_x$=3, and the second part of bits are $N_x$ bits starting from a most significant bit and spanning from a high-order bit to a low-order bit in the other bits, the second part of bits are 000. If $N_x$=3, and the second part of bits are $N_x$ bits starting from a least significant bit and spanning from a low-order bit to a high-order bit in the other bits, the second part of bits are 101.

For another example, it is assumed that $N_{RBG}$ =18, $N_{RBG}^{UL,subband}$ =5, indexes of frequency units in which the frequency range of the first uplink subband is located are 6 to 10, and the first field is 0 0 0 0 0 0 0 0 0 0 1 0 1 1 1 0 0 1. In this case, in the manner shown in C3, the first part of bits are the 1st to 5th bits in the first field, that is, 11001, and the 1st to 5th bits respectively correspond to RBGs whose indexes are 6 to 10. If $N_x$=10, and the second part of bits are $N_x$ bits starting from a least significant bit and spanning from a low-order bit to a high-order bit in the other bits, the second part of bits are 0 0 0 0 0 0 0 1 0 1.

D2. If the quantity of bits of the first field is shown in A2, and the quantity of the first part of bits is shown in B2, the quantity of the second part of bits may be:

$$\left\lceil \log_2\left(N_{RB}^{UL,BWP}\left(N_{RB}^{UL,BWP} + 1\right)/2\right)\right\rceil - \left\lceil \log_2\left(N_{RB}^{UL,Subband}\left(N_{RB}^{UL,Subband} + 1\right)/2\right)\right\rceil.$$

For example, the second part of bits may be $N_x$ bits starting from a least significant bit and spanning from a low-order bit to a high-order bit in the other bits, and

$$N_x = 0,1, \ldots, \left\lceil log_2\left(N_{RB}^{UL,BWP}\left(N_{RB}^{UL,BWP} + 1\right)/2\right)\right\rceil - \left\lceil log_2\left(N_{RB}^{UL,Subband}\left(N_{RB}^{UL,Subband} + 1\right)/2\right)\right\rceil.$$

For example, if $N_{RB}^{UL,BWP} = 273$, and $N_{RB}^{UL,Subband} = 55$, a length of the first field is 16 bits, the first part of bits are 11 bits starting from a least significant bit and spanning from a low-order bit to a high-order bit in the first field, and bits other than the first part of bits in the first field are the second part of bits.

D3. If the quantity of bits of the first field is shown in A1, and the quantity of the first part of bits is shown in B3, the quantity of the second part of bits may be:

$$N_{RBG} - \left\lceil \log_2\left(N_{RB}^{UL,BWP}\left(N_{RB}^{UL,BWP} + 1\right)/2\right)\right\rceil.$$

For example, the second part of bits may be $N_x$ bits starting from a least significant bit and spanning from a low-order bit to a high-order bit in the other bits, and $N_x = 0,1, \ldots, N_{RBG} - \left\lceil \log_2\left(N_{RB}^{UL,BWP}\left(N_{RB}^{UL,BWP} + 1\right)/2\right)\right\rceil$.

For example, if $N_{RB}^{UL,BWP} = 273$, and $N_{RBG}$ = 18, a length of the first field may be 18 bits, the first part of bits are 16 bits starting from a least significant bit and spanning from a low-order bit to a high-order bit in the first field, and the second part of bits are bits other than the first part of bits in the first field.

D4. If the quantity of bits of the first field is shown in A4, and the quantity of the first part of bits is shown in B3, the quantity of the second part of bits may be a first value. The first value may be predefined or preconfigured in the second communication apparatus and the first communication apparatus, or may be indicated by the second communication apparatus to the first communication apparatus, where the first value is a positive integer.

D5. If the quantity of bits of the first field is shown in A5, and the quantity of the first part of bits is shown in any one of B1 to B3, the quantity of the second part of bits may be:

$$\max\left(\left\lceil \log_2\left(N_{RB}^{UL,BWP}\left(N_{RB}^{UL,BWP} + 1\right)/2\right)\right\rceil, N_{RBG}\right) - M.$$

For example, the second part of bits may be $N_x$ bits starting from a least significant bit and spanning from a low-order bit to a high-order bit in the other bits, and

$$N_x = 0,1, \ldots, \max\left(\left\lceil \log_2\left(N_{RB}^{UL,BWP}\left(N_{RB}^{UL,BWP} + 1\right)/2\right)\right\rceil, N_{RBG}\right) - M.$$

Alternatively, the second part of bits are $N_x$ bits starting from a least significant bit and spanning from a low-order bit        to        a        high-order        bit        in        the        other        bits,        and

$$N_x = 0,1,\ldots,\max\left(\left\lceil \log_2\left(N_{RB}^{UL,BWP}\left(N_{RB}^{UL,BWP}+1\right)/2\right)\right\rceil, N_{RBG}\right) - M.$$

D6. If the quantity of bits of the first field is shown in A6, and the quantity of the first part of bits is shown in B3, the quantity of the second part of bits may be $N_x$.

For example, the second part of bits may be $N_x$ bits starting from a least significant bit and spanning from a low-order bit to a high-order bit in the other bits, or may be $N_x$ bits starting from a most significant bit and spanning from a high-order bit to a low-order bit in the other bits.

Certainly, the foregoing provides several possible combination manners of the quantity of bits of the first field, the bit quantity of the first part of bits, and the bit quantity of the second part of bits. Actually, there may be another combination manner of the quantity of bits of the first field, the bit quantity of the first part of bits, and the bit quantity of the second part of bits. This is not specifically limited in this embodiment of this application.

In a possible implementation, when the quantity of bits of the first field is shown in A5 or A6, in addition to the first part of bits and the second part of bits, the first field further has one bit remaining (referred to as a remaining bit), and the remaining bit may indicate a resource allocation type. For example, the resource allocation type includes uplink resource allocation type 0 or uplink resource allocation type 1. In this implementation, the other bits may be all or some bits other than the first part of bits and the remaining bit in the first field. For example, in the cases of D5 and D6, the other bits may be all or some bits other than the first part of bits and the remaining bit in the first field.

The following separately describes a manner in which the first part of bits indicates the first frequency unit set and the first frequency spacing in the manner 1.

E1. The first part of bits indicates the first frequency unit set in a manner of a bitmap (bitmap). In this case, the first part of bits may be described as a bitmap indicating the first frequency unit set.

For example, each bit in the first part of bits corresponds to (or is associated with) one frequency unit in which the frequency range of the first uplink subband is located, and a value indicates that the frequency unit belongs to or does not belong to the first frequency unit set. That the value indicates that the frequency unit belongs to or does not belong to the first frequency unit set may be described as that the value of each bit indicates that the frequency unit is used to transmit the first type of signal, or is not used to transmit the first type of signal. For a meaning of the first uplink subband, refer to the foregoing description.

The following uses the first bit as an example to describe a manner in which a value of the first bit indicates that one frequency unit in the first uplink subband belongs to or does not belong to the first frequency unit set. For a meaning of the first bit, refer to the foregoing description.

For example, if the value of the first bit is a fifth value, it indicates that the frequency unit corresponding to the first bit belongs to the first frequency unit set, that is, is used to transmit the first type of signal; or if the value of the first bit is a sixth value, it indicates that the frequency unit corresponding to the first bit does not belong to the first frequency unit, that is, is not used to transmit the first type of signal. The fifth value may be 1, and the sixth value may be 0; or the fifth value may be 0, and the sixth value may be 1.

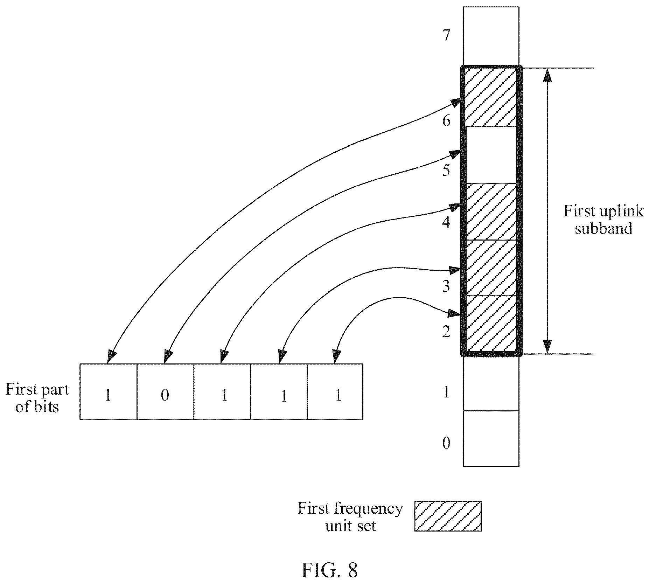

For example, FIG. 8 is a diagram of a first part of bits according to an embodiment of this application. In FIG. 8, an example in which the first part of bits are specifically 1 0 1 1 1, the bandwidth part includes eight frequency units: a frequency unit 0 to a frequency unit 7, and the first uplink subband includes five frequency units: the frequency unit 2 to the frequency unit 6 is used. As shown in FIG. 8, the first part of bits are one-to-one associated with the five frequency units: the frequency unit 2 to the frequency unit 6 (in FIG. 8, a double arrow indicates that each bit is associated with one frequency unit). This is equivalent to that the first part of bits indicates that the frequency unit 2, the frequency unit 3, the frequency unit 4, and the frequency unit 6 belong to the first frequency unit set, and the frequency unit 5 does not belong to the first frequency unit set.

Optionally, E1 is applicable to uplink resource allocation type 0. In addition, E1 is applicable to a case in which the bit quantity of the first part of bits is shown in B1.

E2. The first part of bits indicates a first resource indication value (resource indication value, RIV), and the first RIV is used to determine the first frequency unit set.

In a possible implementation, the first RIV, a first number, and a quantity of allocated RBs (referred to as a third quantity below) meet a first relationship. The first relationship may be preconfigured or predefined in the first communication apparatus and/or the second communication apparatus, or may be indicated by the second communication apparatus to the first communication apparatus. The first part of bits indicates the first RIV, which is equivalent to indicating the first number and the third quantity. The first number and the third quantity may be used to determine the first frequency unit set. The first number is a number, in the first uplink subband, of a starting frequency unit in the first frequency unit set.

For example, the first relationship is that the first RIV is determined based on the first number, the quantity of RBs included in the first uplink subband (referred to as a fourth quantity below), and the third quantity.

If a result of subtracting 1 from the third quantity is less than or equal to a first threshold, the first relationship may be represented as first $RIV = N_{RB}^{UL,Subband}\left(L_{RBs,1}-1\right)+RB'_{start,1}$ ; or if the result of subtracting 1 from the third quantity is greater than the first threshold, the first relationship may be represented as first

$$RIV = N_{RB}^{UL,Subband}\left(N_{RB}^{UL,Subband} - L_{RBs,1} + 1\right) + \left(N_{RB}^{UL,Subband} - 1 - RB'_{start,1}\right)$$ . $RB'_{start,1}$ is an index (namely, the first number) of the starting frequency unit in the first frequency unit set in the first uplink subband, $L_{RBs,1}$ represents the quantity of allocated resource blocks, namely, the third quantity, and $N_{RB}^{UL,Subband}$ is the quantity of RBs included in the first uplink subband, namely, the fourth quantity.

The first threshold may be preconfigured or predefined in the first communication apparatus and/or the second communication apparatus, or may be indicated by the second communication apparatus to the first communication apparatus. The first threshold is, for example, a result of rounding down half of the fourth quantity, that is, $\lfloor N_{RB}^{UL,Subband}/2 \rfloor$. $\lfloor X \rfloor$ represents an operation of rounding down X.

Optionally, $RB_{start,1} = RB'_{start,1} + RB_{start}^{UL,subband}$. $RB_{start}^{UL,subband}$ is a number or an index (referred to as a third index below) of a starting frequency unit in the uplink subband in the uplink bandwidth part.

For example, an index (for example, referred to as a first index, or considered as a starting index) of the starting frequency unit in the first frequency unit set is a sum of the first number and the third index. An index (namely, a second index, or considered as an ending index) of an ending frequency unit in the first frequency unit set is determined based on the first index and the third quantity. For example, the second index is a result obtained by subtracting 1 from a sum of the first index and the third quantity. In this case, the first frequency unit set includes a frequency unit corresponding to each of indexes starting from the first index and ending at the second index.

For example, the first number is 1, the third quantity is 4, and the third index is 1. In this case, it may be determined that the first index is 2, and the second index is 5. In this case, the first frequency unit set includes the frequency unit 2, the frequency unit 3, the frequency unit 4, and the frequency unit 5.

In another possible implementation, the first RIV, a second number, and the third quantity meet a second relationship. The second relationship may be preconfigured or predefined in the first communication apparatus and/or the second communication apparatus, or may be indicated by the second communication apparatus to the first communication apparatus. The first part of bits indicates the first RIV, which is equivalent to indicating the second number and the third quantity. The second number and the third quantity may be used to determine the first frequency unit set. The second number is a number (namely, an index) of a starting frequency unit in the first frequency unit set in the uplink bandwidth part.

The second number may be used to determine a location of the starting frequency unit in the first frequency unit set in the uplink bandwidth part. It may be understood that both the first number and the second number indicate a location of the starting frequency unit in the first frequency unit set, with different references selected.

For example, in the first uplink subband, a number of the 1st frequency unit is 0, a number of the 2nd frequency unit is 1, and so on. The first number is a number, in the first uplink subband, of the starting frequency unit in the first frequency unit set. In the uplink bandwidth part, a number of the 1st frequency unit is 0, a number of the 2nd frequency unit is 1, and so on. The second number is a number of the starting frequency unit in the first frequency unit set in the uplink bandwidth part.

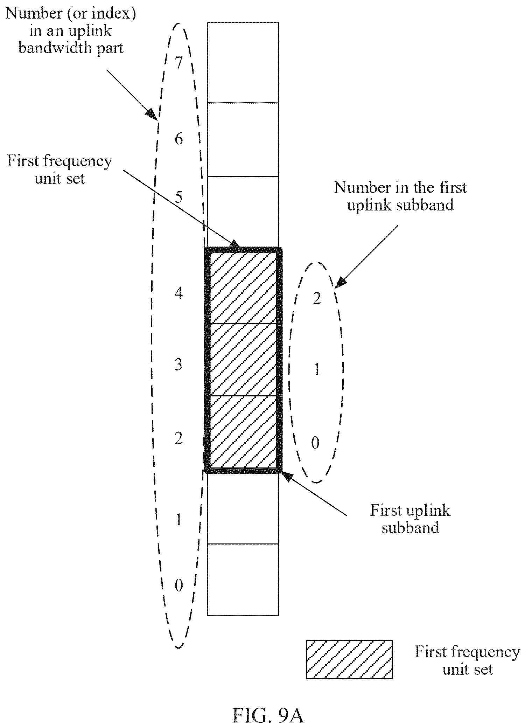

For example, FIG. 9A is a diagram of a first frequency unit set according to an embodiment of this application. As shown in FIG. 9A, the number of the starting frequency unit in the first frequency unit set in the uplink bandwidth part is 2, that is, the second number is 2; and the number of the starting frequency unit in the first frequency unit set in the uplink subband is 0, that is, the first number is 0.

In a possible implementation, the second relationship may be that the first RIV is determined based on the second number, the third quantity, and the fourth quantity.

For example, if a result of subtracting 1 from the third quantity is less than or equal to a second threshold, first

$$RIV = N_{RB}^{UL,Subband}\left(L_{RBs,1} - 1\right) + RB_{start,1} - RB_{start}^{UL,subband}$$ ; or if the result of subtracting 1 from the third quantity is greater than the second threshold, first

$$RIV = N_{RB}^{UL,Subband}\left(N_{RB}^{UL,Subband} - L_{RBs,1} + 1\right) + \left(N_{RB}^{UL,Subband} - 1 - RB_{start,1} + RB_{start}^{UL,subband}\right)$$
.

The second threshold may be preconfigured or predefined in the first communication apparatus and/or the second communication apparatus, or may be indicated by the second communication apparatus to the first communication apparatus. The second threshold may be the same as or different from the first threshold.

In this implementation, the index (for example, referred to as the first index, or considered as the starting index) of the starting frequency unit in the first frequency unit set is the second number, and the index (for example, the second index, or considered as the ending index) of the ending frequency unit in the first frequency unit set is determined based on the first index and the third quantity. For example, the second index is the result obtained by subtracting 1 from the sum of the first index and the third quantity. In this case, the first frequency unit set includes the frequency unit corresponding to each of the indexes starting from the first index and ending at the second index.

For example, still refer to FIG. 9A. The third quantity is 3, and the second number is 2. In this case, it may be determined that the first index is 2, and the second index is 3. In this case, the first frequency unit set includes the frequency unit 2, the frequency unit 3, and the frequency unit 4.

Unless otherwise specified, the index of the frequency unit mentioned in this embodiment of this application may be an index of the frequency unit in a bandwidth part (for example, the uplink bandwidth part).

Optionally, E2 is applicable to uplink resource allocation type 1. In addition, E2 is applicable to a case in which the bit quantity of the first part of bits is shown in B2 or B3.

In a possible implementation, when the first frequency unit set is indicated in the manner shown in E2, if frequency hopping (including inter-slot frequency hopping or intra-slot frequency hopping) exists on the frequency domain resource for transmitting the first type of signal, the first part of bits may further indicate a frequency hopping interval in addition to the first RIV. There may be one or more frequency hopping intervals. This is not limited in this embodiment of this application.

For example, a fifth part of bits (whose bit quantity is, for example, $\left\lceil log_2\left(N_{RB}^{UL,BWP}\left(N_{RB}^{UL,BWP}+1\right)/2\right)\right\rceil - N_{UL\_hop}$) in the first part of bits indicates the first RIV, and a sixth part of bits (whose bit quantity is, for example, $N_{UL\_hop}$)) in the first part of bits indicates the frequency hopping interval. $N_{UL\_hop}$ is a positive integer. The sixth part of bits are, for example, bits other than the fifth part of bits in the first part of bits.

For example, the fifth part of bits are $\left\lceil log_2\left(N_{RB}^{UL,BWP}\left(N_{RB}^{UL,BWP}+1\right)/2\right)\right\rceil - N_{UL\_hop}$ bits starting from a most significant bit and spanning from a high-order bit to a low-order bit in the first part of bits, or $\left\lceil log_2\left(N_{RB}^{UL,BWP}\left(N_{RB}^{UL,BWP}+1\right)/2\right)\right\rceil - N_{UL\_hop}$ bits starting from a least significant bit and spanning from a low-order bit to a high-order bit in the first part of bits.

The foregoing describes the manner in which the first part of bits indicates the first frequency unit set by using an example. Certainly, there are a plurality of manners in which the first part of bits indicates the first frequency unit set. This is not specifically limited in this embodiment of this application.

In addition, a manner in which the second part of bits indicates the first frequency spacing may include manners shown in F1 and F2, which is described below.

F1. The second part of bits carries the first frequency spacing. F1 is equivalent to that the second part of bits directly indicates the first frequency spacing. For example, the second part of bits carries a value of the first frequency spacing.

F2. The second part of bits carry a second value. The second value is used to determine the first frequency spacing.

For example, the second value may be used to determine the first frequency spacing from a first frequency spacing set. The first frequency spacing set includes at least one frequency spacing, and the first frequency spacing set may be considered as a candidate value of the first frequency spacing. Each frequency spacing in the first frequency spacing set may be associated with one index, one row number, or one column number, and the second value may be an index, a row number, or a column number of the first frequency spacing.

In this case, the second communication apparatus may indicate the first frequency spacing set to the first communication apparatus by using second indication information. The second indication information is, for example, RRC. Alternatively, the first frequency spacing set is predefined in the second communication apparatus and the first communication apparatus, for example, configured in the first communication apparatus and the second communication apparatus by using a protocol. Optionally, the first frequency spacing set is one frequency spacing table, the frequency spacing table includes $N_o$ rows, and $N_o$ is an integer greater than 0 and less than or equal to $2^{N_x}$.

For example, for a first frequency spacing set, refer to Table 1.

Table 1

| Row number of a frequency spacing | Frequency spacing |
|---|---|
| 0 | 3 |
| 1 | 4 |

As shown in Table 1, if the second value is 1, the first frequency spacing is 4.

Optionally, Manner 1 is applicable to a case in which the first type of time unit is an SBFD time unit and the second type of time unit is a non-SBFD time unit.

**Manner 2: Different fields in the first information indicate the first frequency unit set and the first frequency spacing.**

For example, a part of or all bits in the first field in the first information indicate the first frequency unit set, and a second field in the first information indicates the first frequency spacing.

For example, the first information is DCI, the first field is an FDRA field, and the second field is a time domain resource allocation (time domain resource assignment, TDRA) field; or the first information is RRC, the first field is a frequencyDomainAllocation field in a ConfiguredGrantConfig information element in the RRC, and the second field is a time domain allocation (frequencyDomainAllocation) field in a ConfiguredGrantConfig information element in the RRC.

For example, the first field may include $N_{RBG}$ bits, and the $N_{RBG}$ bits may indicate the first frequency unit set in a form of a bitmap. Alternatively, the first field may include $\left\lceil log_2\left(N_{RB}^{UL,BWP}\left(N_{RB}^{UL,BWP}+1\right)/2\right)\right\rceil$ bits, the $\left\lceil log_2\left(N_{RB}^{UL,BWP}\left(N_{RB}^{UL,BWP}+1\right)/2\right)\right\rceil$ bits may indicate a first RIV, and the first RIV indicates the first frequency unit set. For a manner in which the first RIV indicates the first frequency unit set, refer to the foregoing content.

The following describes a manner in which the second field indicates the first frequency spacing in the manner 2.

G1. The second field directly indicates the first frequency spacing.

G2. The second field indicates a third value, and the third value is used to determine the first frequency spacing from a TDRA table.

The TDRA table indicates a first time domain resource set and a first frequency spacing set. The first time domain resource set is used to determine a time domain resource for transmitting the first type of signal. For example, the first time domain resource set may be considered as a candidate time domain resource for transmitting the first type of signal. For a meaning of the first frequency spacing set, refer to the foregoing description.

The TDRA table may include a plurality of indexes, one frequency spacing, in the first frequency spacing set, corresponding to each of the plurality of indexes, and one time domain resource in the first time domain resource set. The TDRA table may be predefined, or may be indicated by the second communication apparatus to the first communication apparatus by using third indication information. The third indication information may be RRC.

For example, for a TDRA table, refer to Table 2.

Table 2

| Index | Time domain resource (index of a starting time unit, and length of an allocated time unit) | Frequency spacing |
|---|---|---|
| 0 | 0, 4 | 4 |
| 1 | 2, 6 | 5 |

The index of the starting time unit may be understood as an index of the 1st time unit for transmitting the first type of signal. The length of the allocated time unit may be referred to as a time unit length for short, or may be referred to as a quantity of allocated time units.

As shown in Table 2, if a value of the third value is 1, time units used to transmit the first type of signal include a time unit 2 to a time unit 7, and the first frequency spacing is 5.

Optionally, Manner 2 is applicable to a case in which the first type of time unit is a non-SBFD time unit and the second type of time unit is an SBFD time unit, and a case in which the first type of time unit is an SBFD time unit and the second type of time unit is a non-SBFD time unit.

In the manner 1 or the manner 2, the second communication apparatus may further send first indication information to the first communication apparatus. correspondingly, the first communication apparatus receives the first indication information from the second communication apparatus. The first indication information may be some information in the first information, or the first indication information and the first information are different information. For example, the first indication information is carried in the second field in the first information, and the second field indicates a first time domain resource.

The first indication information indicates the first time domain resource, and the first time domain resource is a time unit used to transmit the first type of signal. The first time domain resource may include, for example, at least one time unit in the first type of time unit and at least one time unit in the second type of time unit. The first time domain resource may include, for example, a first time unit, and the first time unit is, for example, an h$^{th}$ time unit used to transmit the first type of signal, where h is a positive integer.

S602: The first communication apparatus determines the first frequency unit set and the second frequency unit set.

In the manner 1, a manner in which the first communication apparatus determines the first part of bits in the first information varies with relative locations of the first part of bits in the first field, and a manner in which the first information indicates the first frequency unit set, which is described below by using an example.

K1. If the relative locations of the first part of bits in the first field meets the case shown in C1, the first communication apparatus may determine the first part of bits in the first information based on the frequency unit in which the frequency range of the first uplink subband is located. The quantity of frequency units in which the frequency range of the first uplink subband is located may be preconfigured or predefined in the first communication apparatus, or may be obtained by the first communication apparatus from the second communication apparatus.

How the first communication apparatus determines the bit quantity of the first part of bits is further involved. For example, a second parameter is preconfigured or predefined in the first communication apparatus, and the second parameter is a parameter used to determine the bit quantity of the first part of bits. Alternatively, the first communication apparatus obtains a second parameter from the second communication apparatus, and the first communication apparatus may determine the bit quantity of the first part of bits based on the second parameter. Alternatively, the first communication apparatus obtains the bit quantity of the first part of bits from the second communication apparatus. Alternatively, the bit quantity of the first part of bits may be preconfigured or predefined in the first communication apparatus.

For example, when the bit quantity of the first part of bits is B1, the second parameter may include the quantity of frequency units in which the frequency range of the first uplink subband is located (or to which the frequency range of the first uplink subband belongs), and the first communication apparatus obtains the bit quantity of the first part of bits by obtaining the second parameter. When the bit quantity of the first part of bits is B2, the second parameter may include the quantity of resource blocks included in the first uplink subband. After obtaining the second parameter, the first communication apparatus may determine the quantity of the first part of bits in the manner shown in B2. When the bit quantity of the first part of bits is B3, the second parameter may include the quantity of resource blocks included in the uplink bandwidth part. After obtaining the second parameter, the first communication apparatus may determine the quantity of the first part of bits in the manner shown in B3.

K2. If the relative locations of the first part of bits in the first field meets the case shown in C2 or C3, the first communication apparatus may directly determine the first part of bits in the first information based on the case shown in C2 or C3. For a manner in which the first communication apparatus determines the bit quantity of the first part of bits, refer to the foregoing content.

After the first communication apparatus determines the first part of bits, if the second communication apparatus indicates the first frequency unit set in the manner shown in E1, the first communication apparatus may obtain the first frequency unit set based on the first part of bits.

If the second communication apparatus indicates the first frequency unit set in the manner shown in E2, the first communication apparatus may obtain the first RIV based on the first part of bits, and determine the first number and the quantity of allocated resource blocks based on the first RIV. Further, the first communication apparatus determines the first frequency unit set based on the first number and the quantity of allocated resource blocks.

For example, the first RIV determines the first number and the third quantity. The first communication apparatus may use the sum of the first number and the index (namely, the third index) of the starting frequency unit in the first uplink subband as the index (which may be referred to as the first index) of the starting frequency unit in the first frequency unit set, and determine the sum of the first index and the third quantity as the index (which may be referred to as the second index) of the ending frequency unit in the first frequency unit set. This is equivalent to determining the first frequency unit set.

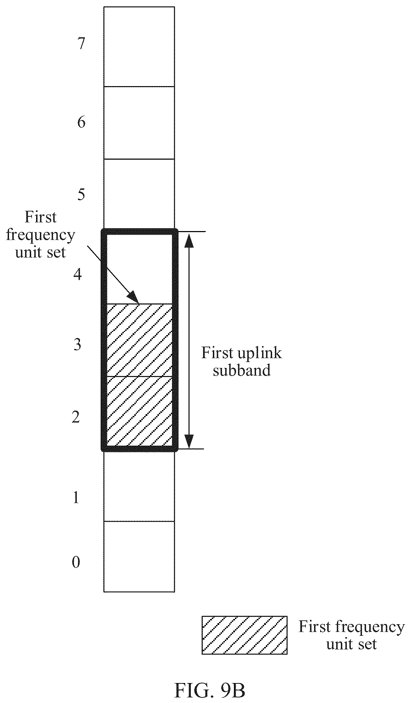

FIG. 9B is a diagram of a first frequency unit set according to an embodiment of this application. In FIG. 9B, an example in which the first number is 0, the quantity (namely, the third quantity) of allocated resource blocks is 2, and the index (namely, the third index) of the starting frequency unit in the first uplink subband is 2 is used for description. In this case, the first communication apparatus may determine that the first frequency unit set includes a frequency unit (2+0) and a frequency unit 3.

For example, the first RIV determines the second number and the third quantity. The first communication apparatus may use the second number as the index (namely, the first index) of the starting frequency unit in the first frequency unit set, and determine a sum of the second number and the quantity of allocated resource blocks as the index (namely, the second index) of the ending frequency unit in the first frequency unit set. This is equivalent to determining the first frequency unit set.

Optionally, when the first information further indicates the frequency hopping interval, the first communication apparatus may further determine the frequency hopping interval based on the first information.

In the manner 2, when the first frequency unit set is indicated by a part of or all bits in the first field, for a manner in which the first communication apparatus determines the first frequency unit set, refer to the content described in K1 or K2.

The following describes a manner in which the first communication apparatus determines the first frequency spacing.

In the manner 1, the manner in which the first communication apparatus determines the first frequency spacing varies with a manner in which the first information indicates the first frequency spacing, which is described below.

If the second communication apparatus indicates the first frequency spacing in the manner shown in F1, the first communication apparatus may directly obtain the first frequency spacing based on the second part of bits. Alternatively, if the second communication apparatus indicates the first frequency spacing in the manner shown in F2, the first communication apparatus may directly obtain the second value based on the second part of bits, and determine the first frequency spacing from the first frequency spacing set based on the second value. For example, still refer to Table 1. If the second value is 0, the first communication apparatus determines that the frequency spacing is 3.

In the manner 2, the manner in which the first communication apparatus determines the first frequency spacing varies with a manner in which the first information indicates the first frequency spacing, which is described below.

If the first frequency spacing is indicated in the manner shown in G1, the first communication apparatus may directly obtain the first frequency spacing based on the second field. Alternatively, if the first frequency spacing is indicated in the manner shown in G2, the first communication apparatus may obtain the third value based on the second field, and determine the first frequency spacing from the TDRA table based on the third value. For example, still refer to Table 2. If the second value is 0, the first communication apparatus determines that the frequency spacing is 4.

After determining the first frequency unit set and the first frequency spacing, the first communication apparatus may determine the second frequency unit set based on the first frequency unit set and the first frequency spacing. The following describes a manner of determining the second frequency unit set.

M1. The first communication apparatus determines an index of the $i^{th}$ frequency unit in the second frequency unit set based on an index of the $j^{th}$ frequency unit in the first frequency unit set and the first frequency spacing. For values of i and j and a relationship thereof, refer to the foregoing content.

For example, for a manner of calculating the index of the $i^{th}$ frequency unit in the second frequency unit set, refer to the following formula:

$$R_i = R_j + R_{offset}$$

$R_j$ represents the index of the $j^{th}$ frequency unit in the first frequency unit set, $R_i$ represents the index of the $i^{th}$ frequency unit in the second frequency unit set, and $R_{offset}$ represents the first frequency spacing.

M2. The first communication apparatus determines an index of the $i^{th}$ frequency unit in the second frequency unit set based on an index of the $j^{th}$ frequency unit in the first frequency unit set, the first frequency spacing, and a first parameter. The first parameter is one of the quantity of RBs included in the uplink bandwidth part, the quantity of RBGs included in the uplink bandwidth part, and the quantity of RBs included in the first uplink subband.

For example, for a manner of calculating the index of the $i^{th}$ frequency unit in the second frequency unit set, refer to the following formula:

$$R_i = \left(R_j + R_{offset}\right) \bmod N_{RB}^{UL,BWP}$$

$N_{RB}^{UL,BWP}$ is the quantity of RBs included in the uplink bandwidth part, and mod represents a modulo operation.

Alternatively, for a manner of calculating the index of the $i^{th}$ frequency unit in the second frequency unit set, refer to the following formula:

$$R_i = \left(R_j + R_{offset}\right) \bmod N_{RBG}$$

$N_{RBG}$ is the quantity of RBGs included in the uplink bandwidth part.

Alternatively, for a manner of calculating the index of the $i^{th}$ frequency unit in the second frequency unit set, refer to the following formula:

$$R_i = R_j \bmod N_{RB}^{UL,Subband} + R_{offset}$$

$N_{RB}^{UL,Subband}$ is the quantity of RBs included in the first uplink subband.

In the case of M1 or M2, when j is any positive integer from 1 to e, and i is any positive integer from 1 to u, in a possible design, the first frequency unit set and the second frequency unit set may meet that a first frequency difference is associated with a second frequency difference. That the first frequency difference is associated with the second frequency difference may also be described as that there is a second relationship between the first frequency difference and the second frequency difference. For example, that the first frequency difference is associated with the second frequency difference may be that the first frequency difference is equal to the second frequency difference, or the first frequency difference is different from the second frequency difference by an eighth value. The eighth value may be predefined or preconfigured in the first communication apparatus and/or the second communication apparatus, or may be obtained by the first communication apparatus from the second communication apparatus. The eighth value may be a positive integer or a negative integer.

The first frequency difference is a starting frequency difference between the $i^{th}$ frequency unit and a $k^{th}$ frequency unit in the second frequency unit set. Alternatively, the first frequency difference is an ending frequency difference between the $i^{th}$ frequency unit and a $k^{th}$ frequency unit in the second frequency unit set. The second frequency difference is a starting frequency difference between the $j^{th}$ frequency unit and an $m^{th}$ frequency unit in the first frequency unit set. Alternatively, the second frequency difference is an ending frequency difference between the $j^{th}$ frequency unit and an $m^{th}$ frequency unit in the first frequency unit set. k is any positive integer from 1 to u, and m is any positive integer from 1 to e; or k is a positive integer other than i in 1 to u, and m is a positive integer other than j in 1 to e.

In this design, after determining the index of the $i^{th}$ frequency unit in the second frequency set unit, the first communication apparatus may determine the second frequency unit set based on the second relationship corresponding to the first frequency difference and the second frequency difference.

The following uses an example in which values of i and j are the same and are 1, values of m and k are the same, the first frequency spacing is 3, the first frequency unit includes a frequency unit 1, a frequency unit 3, and a frequency unit 5, and values of u and e are the same, to describe the foregoing process of determining the second frequency unit.

The first communication apparatus may determine that an index of a starting frequency unit in the second frequency unit set is (1+3), that is, a frequency unit 4. The second communication apparatus determines that a frequency difference between the frequency unit 1 and the frequency unit 3 is 2. Therefore, the first communication apparatus may determine that the $2^{nd}$ frequency unit in the second frequency unit set is (2+4), that is, a frequency unit 6. The second communication apparatus determines that a frequency difference between the frequency unit 1 and the frequency unit 5 is 4. Therefore, the first communication apparatus may determine that the $3^{rd}$ frequency unit in the second frequency unit set is (4+4), that is, a frequency unit 8. In this way, the first communication apparatus determines that the second frequency unit set includes the frequency unit 4, the frequency unit 6, and the frequency unit 8.

Optionally, the quantity of frequency units included in the second frequency unit set (which may be simplified as a first quantity) is associated with the quantity of frequency units included in the first frequency unit set (which may be simplified as a second quantity). For example, the first quantity is the same as the second quantity, or the first quantity is different from the second quantity by a ninth value. The ninth value may be predefined or preconfigured in the first communication apparatus and/or the second communication apparatus, or may be obtained by the first communication apparatus from the second communication apparatus. The ninth value may be a positive integer or a negative integer.

Because a frequency unit used to send the first type of signal in the non-SBFD time unit belongs to the uplink subband, any frequency unit in a frequency unit set (which may be the first frequency unit set or the second frequency unit set) used to transmit the first type of signal in the non-SBFD time unit also belongs to the uplink subband. The following uses an example in which the frequency unit set used to transmit the first type of signal in the non-SBFD time unit is the second frequency unit set for description.

In a process of determining the second frequency unit set in any one of the foregoing manners, if RBs included in any determined second frequency unit (for example, a frequency unit A) are all located in the uplink subband, the first communication apparatus may determine these second frequency units as the second frequency unit set.

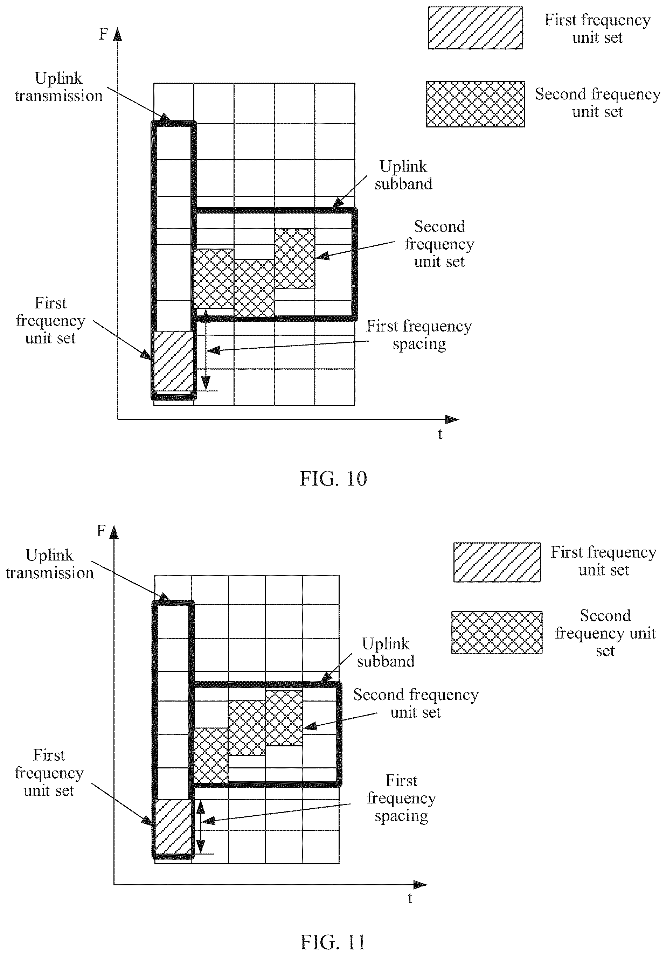

For example, FIG. 10 is a diagram of a first frequency unit set and a second frequency unit set according to an embodiment of this application. In FIG. 10, an example in which the first type of time unit is an uplink time unit and the second type of time unit is an SBFD time unit is used. If each second frequency unit determined by first communication apparatus is located in the uplink subband, the first communication apparatus may determine these second frequency units as frequency units in the second frequency unit set. In FIG. 10, a horizontal coordinate t represents time, and a vertical coordinate F represents frequency. A frequency unit used for uplink transmission in the first type of time unit is shown by a thick block. An uplink subband in the second type of time unit is also shown by a thick block.

Alternatively, the first communication apparatus determines that a $g^{th}$ RB included in a second frequency unit (for example, the frequency unit A) is located outside the uplink subband, where g is a positive integer. In this case, the first communication apparatus may adjust a starting location or an ending location of the first frequency unit set, so that any frequency unit in the second frequency unit set is located in the uplink subband.

For example, if the frequency unit A is a frequency unit with a smallest index in determined second frequency units, the first communication apparatus may adjust the starting location of the second frequency unit set to a starting location or an ending location of the $1^{st}$ RB of the frequency unit A, or a starting location or an ending location of the $1^{st}$ RB of a next frequency unit of the frequency unit A, or a starting location or an ending location of a $g^{th}$ RB of the next frequency unit of the frequency unit A, or a starting location of the uplink subband. An index of the next frequency unit of the frequency unit A is greater than an index of the frequency unit A.

Alternatively, if the frequency unit A is a frequency unit with a smallest index in determined second frequency units, the first communication apparatus may determine the ending location of the second frequency unit set as a starting location or an ending location of the last RB of the frequency unit A, or a starting location or an ending location of the last RB of a previous frequency unit of the frequency unit A, or a starting location or an ending location of a g$^{th}$ RB of the previous frequency unit of the frequency unit A, or an ending location of the uplink subband. An index of the previous frequency unit of the frequency unit A is less than an index of the frequency unit A.

For example, FIG. 11 is a diagram of a first frequency unit set and a second frequency unit set according to an embodiment of this application. In FIG. 11, an example in which the first type of time unit is an uplink time unit and the second type of time unit is an SBFD time unit is used. The index of the starting frequency unit in the second frequency unit set is obtained by adding the first frequency spacing to the index of the starting frequency unit in the first frequency unit set. Some RBs of the starting frequency unit in the second frequency unit set are located outside the uplink subband. In this case, the first communication apparatus may adjust the starting location of the second frequency unit set to the starting location of the uplink subband, to obtain the second frequency unit set shown in FIG. 11. As shown in FIG. 11, each frequency unit in the second frequency unit set is located in the uplink subband. In FIG. 11, a horizontal coordinate t represents time, and a vertical coordinate F represents frequency. A frequency unit used for uplink transmission in the first type of time unit is shown by a thick block. An uplink subband in the second type of time unit is also shown by a thick block.

In a possible design, before performing S602, the first communication apparatus may further determine a specific type of the first type of time unit. For example, the first communication apparatus may determine a type of the first time unit based on the first indication information, and determine that the type of the first type of time unit is the type of the first time unit.

S603: The first communication apparatus sends the first type of signal to the second communication apparatus on a part of or all frequency units in the first frequency unit set and on a part of or all frequency units in the second frequency unit set. Correspondingly, the second communication apparatus receives the first type of signal from the first communication apparatus.

For example, the first communication apparatus may select a part of or all frequency units in the first frequency unit set from the first frequency unit set to send the first type of signal, and may select a part of or all frequency units in the second frequency unit set from the second frequency unit set to send the first type of signal. For example, the first communication apparatus may select a part of or all frequency units in the first frequency unit set and a part of or all frequency units in the second frequency unit set in a plurality of manners. This is not specifically limited in this embodiment of this application.

In this embodiment of this application, the first information may indicate one frequency unit set in one type of time unit and the first frequency spacing, so that the first communication apparatus can determine frequency unit sets in two types of time units. In addition, the first frequency unit set and the second frequency unit set may be different. This improves flexibility of the frequency unit sets in the two types of time units. In addition, the second communication apparatus may flexibly control the second frequency unit set or the first frequency unit set based on the first frequency spacing. For example, the second communication apparatus may allocate a frequency unit used to transmit the first type of signal in the non-SBFD time unit near an edge of the uplink bandwidth part, so that remaining frequency units in the uplink bandwidth part are not scattered. Similarly, the second communication apparatus may also allocate a frequency unit used to transmit the first type of signal in the SBFD unit near an edge of the uplink subband, so that remaining frequency units in the uplink subband are not scattered. This helps the second communication apparatus better allocate the remaining frequency units in the uplink subband, thereby helping improve utilization of uplink frequency resource allocation, and improve performance of an uplink transmission resource.

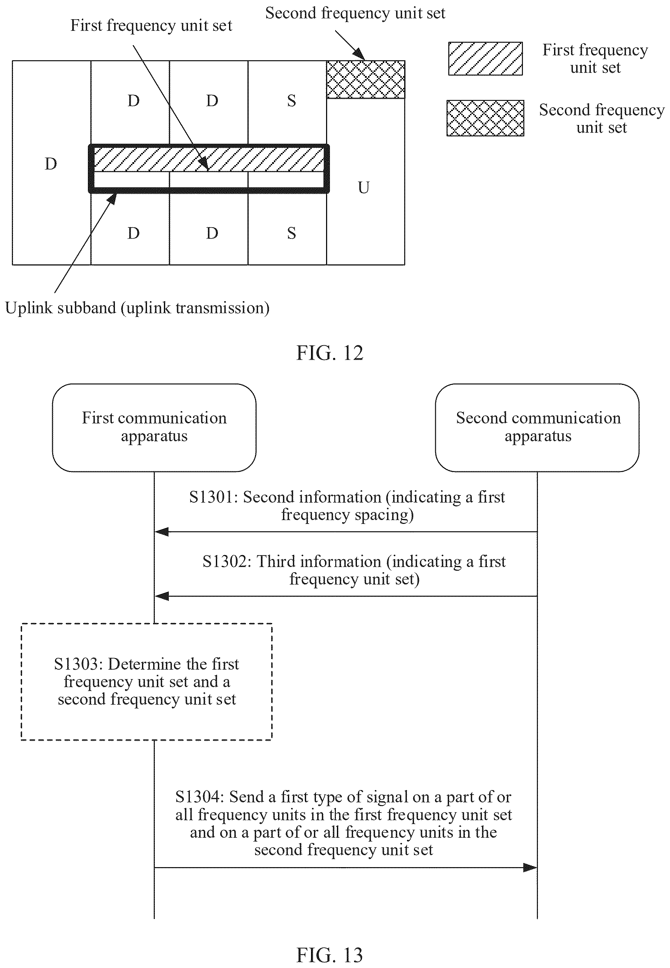

For example, FIG. 12 is a diagram of a first frequency unit set and a second frequency unit set according to an embodiment of this application. In FIG. 12, an example in which the first type of time unit is an SBFD time unit and the second type of time unit is an uplink time unit is used. As shown in FIG. 12, the second communication apparatus may flexibly indicate the first frequency unit set and the second frequency unit set (as shown in FIG. 12, a frequency range of any frequency unit in the second frequency unit set is different from a frequency range of a frequency unit in the first frequency unit set), and the second frequency unit set may be close to an edge of the uplink bandwidth part. This helps the second communication apparatus allocates remaining frequency units in the uplink bandwidth part.

An embodiment of this application further provides a communication method. In the method, a second communication apparatus may indicate a first frequency spacing to a first communication apparatus by using one piece of information (for example, second information), and indicate a first frequency unit set to the first communication apparatus by using another piece of information (for example, third information). In this way, the first communication apparatus may determine a second frequency unit set based on the first frequency spacing and the first frequency unit set, and both the first frequency unit set and the second frequency unit set are used to transmit a first type of signal. In this way, a manner of determining a frequency domain resource for transmitting a signal is provided.

FIG. 13 is a diagram of a communication method according to an embodiment of this application.

S1301: A second communication apparatus sends second information to a first communication apparatus.

Correspondingly, the first communication apparatus receives the second information from the second communication apparatus. The second information indicates a first frequency spacing. The second information is, for example, RRC. For content of the first frequency spacing and a manner of indicating the first frequency spacing, refer to the content described in FIG. 6.

S1302: The second communication apparatus sends third information to the first communication apparatus. Correspondingly, the first communication apparatus receives the third information from the second communication apparatus. The third information indicates a first frequency unit set. The third information is, for example, DCI. The first frequency unit set may be indicated, for example, by an FDRA field in the DCI.

For content of the first frequency unit set, refer to the content described in FIG. 6. In addition, for a manner in which the third information indicates the first frequency unit set, refer to the content in which the first part of bits or a part of or all bits in the first field indicate the first frequency unit set in FIG. 6. Details are not described herein again.

S1301 and S1302 may be performed in any sequence. This is not specifically limited in this embodiment of this application.

S1303: The first communication apparatus determines the first frequency unit set and a second frequency unit set.

For content of determining the first frequency unit set and the second frequency unit set by the first communication apparatus, refer to the content described in FIG. 6.

In addition to the manner of determining the second frequency unit set in FIG. 6, the first communication apparatus in this embodiment of this application may further determine an index of an i$^{th}$ frequency unit in the second frequency unit set based on an index of a j$^{th}$ frequency unit in the first frequency unit set, the first frequency spacing, and a first parameter. The first parameter is one of a quantity of RBs included in an uplink bandwidth part, a quantity of RBGs included in the uplink bandwidth part, a quantity of RBs included in a first uplink subband, and a scale factor. The scale factor may be preconfigured or predefined in the first communication apparatus and/or the second communication apparatus, or may be obtained by the first communication apparatus from the second communication apparatus. A formula of the scaling factor is as follows:

$$\alpha = N_{RB}^{UL,Subband}/N_{RB}^{UL,BWP}$$

$\alpha$ is the scale factor.

For example, a formula of determining the index of the i$^{th}$ frequency unit in the second frequency unit set is as follows:

$$R_j = R_i mod N_{RB}^{UL,Subband} + R_{offset}$$

Alternatively, a formula of determining the index of the i$^{th}$ frequency unit in the second frequency unit set is as follows:

$$R_j = R_i mod N_{RBG}^{UL,Subband} + R_{offset}$$

Alternatively, a formula of determining the index of the i$^{th}$ frequency unit in the second frequency unit set is as follows:

$$R_j = [R_i \times \alpha] + R_{offset}$$

In the foregoing formula, $[R_i \times \alpha]$ represents performing a rounding operation on $R_i \times \alpha$, which is one of rounding up, rounding down, or rounding off.

In a possible implementation, before performing S1303, the first communication apparatus may further receive first indication information from the second communication apparatus, and determine that a type of a first type of time unit is a type of a first time unit. For content of the first indication information, the first type of time unit, and the first time unit, refer to the content in FIG. 6.

S1304: The first communication apparatus sends a first type of signal to the second communication apparatus on a part of or all frequency units in the first frequency unit set and on a part of or all frequency units in the second frequency unit set. Correspondingly, the second communication apparatus receives the first type of signal from the first communication apparatus.

In the embodiment shown in FIG. 13, the second communication apparatus indicates the first frequency spacing by using the second information, and indicates the first frequency unit set to the first communication apparatus by using the third information. The first communication apparatus may also determine frequency unit sets in two types of time units. This provides a manner of determining a frequency resource. In addition, in this embodiment, the first frequency spacing is independently indicated by the second information. In this way, changes to the third information can be reduced as much as possible, thereby helping reduce implementation costs of the solution. In addition, the first frequency unit set and the second frequency unit set may be different, so that flexibility of the frequency unit sets in the two types of time units is improved. In addition, the second communication apparatus may flexibly control the second frequency unit set or the first frequency unit set based on the first frequency spacing, thereby helping improve utilization of uplink frequency resource allocation, and improve performance of an uplink transmission resource.

An embodiment of this application further provides a communication method. In the method, a second communication apparatus may indicate a first frequency unit set to a first communication apparatus by using another piece of information (for example, fourth information), and a first frequency spacing is preconfigured or predefined in the first communication apparatus. In this way, the first communication apparatus may determine a second frequency unit set based on the first frequency spacing and the first frequency unit set, and both the first frequency unit set and the second frequency unit set are used to transmit a first type of signal. In this way, a manner of determining a frequency domain resource for transmitting a signal is provided.

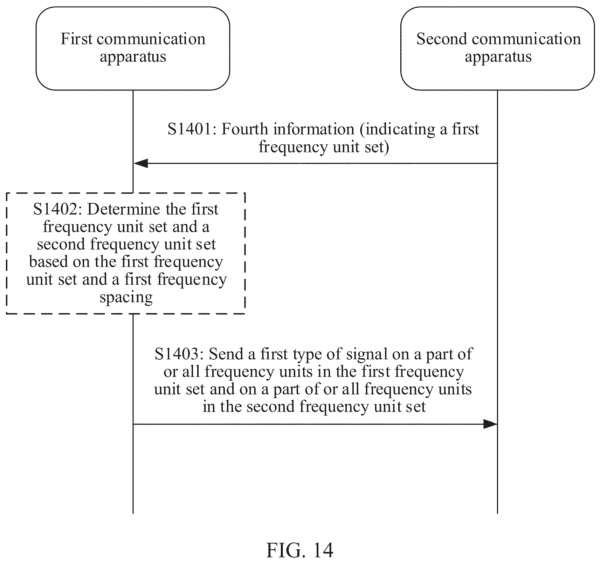

FIG. 14 is a diagram of a communication method according to an embodiment of this application.

S1401: A second communication apparatus sends fourth information to a first communication apparatus. Correspondingly, the first communication apparatus receives the fourth information from the second communication apparatus. The fourth information indicates a first frequency unit set. The fourth information is, for example, DCI. The first frequency unit set may be indicated, for example, by an FDRA field in the DCI.

For content of the first frequency unit set, refer to the content described in FIG. 6. In addition, for a manner in which the fourth information indicates the first frequency unit set, refer to the content in which the first part of bits or a part of or all bits in the first field indicate the first frequency unit set in FIG. 6. Details are not described herein again.

S1402: The first communication apparatus determines the first frequency unit set and a second frequency unit set based on the first frequency unit set and the first frequency spacing.

The first frequency spacing may be preconfigured or predefined in the first communication apparatus and the second communication apparatus, for example, defined in the first communication apparatus by using a protocol. Optionally, $R_{offset} = RB_{start}^{UL,subband}$.

For content of determining the first frequency unit set and the second frequency unit set by the first communication apparatus, refer to the content described in FIG. 13.

In a possible implementation, before performing S1402, the first communication apparatus may further receive first indication information from the second communication apparatus, and determine that a type of a first type of time unit is a type of a first time unit. For content of the first indication information, the first type of time unit, and the first time unit, refer to the content in FIG. 6.

S1403: The first communication apparatus sends a first type of signal to the second communication apparatus on a part of or all frequency units in the first frequency unit set and on a part of or all frequency units in the second frequency unit set. Correspondingly, the second communication apparatus receives the first type of signal from the first communication apparatus.

In this embodiment of this application, the second communication apparatus may indicate the first frequency unit set to the first communication apparatus, and the first communication apparatus may also determine frequency unit sets in two types of time units. This provides a manner of determining a frequency resource. In addition, in this embodiment, the first frequency spacing is preconfigured or predefined in the first communication apparatus. Therefore, a quantity of interactions and a data transmission amount between the first communication apparatus and the second communication apparatus can be reduced. In addition, the first frequency unit set and the second frequency unit set may be different, so that flexibility of the frequency unit sets in the two types of time units is improved. In addition, the second communication apparatus may flexibly control the second frequency unit set or the first frequency unit set based on the first frequency spacing, thereby helping improve utilization of uplink frequency resource allocation, and improve performance of an uplink transmission resource.

An embodiment of this application further provides a communication method. In the method, a second communication apparatus may indicate a first frequency unit set to a first communication apparatus by using one piece of information (for example, fifth information), and the first communication apparatus may determine a second frequency unit set based on the fifth information. In this way, both the first frequency unit set and the second frequency unit set are used to transmit a first type of signal. In this way, a manner of determining a frequency domain resource for transmitting a signal is provided.

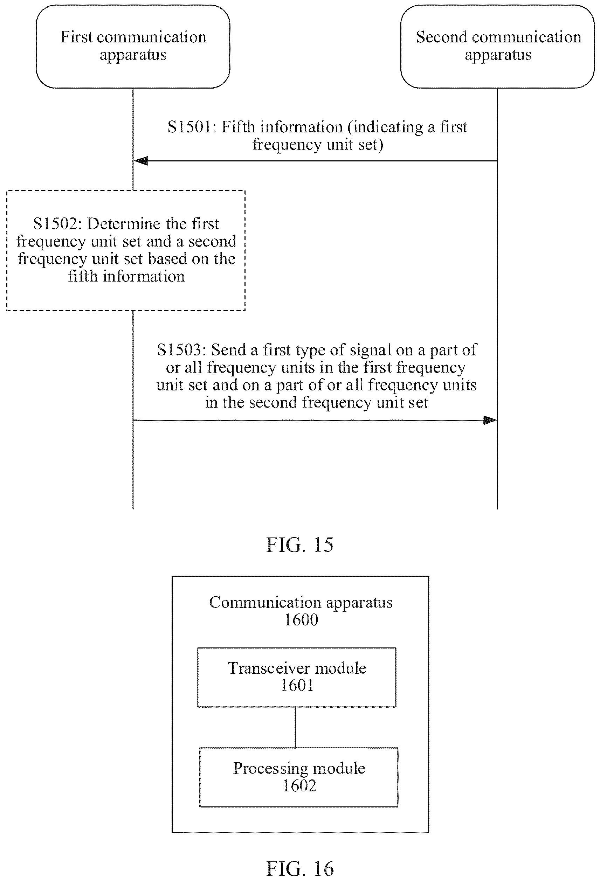

FIG. 15 is a diagram of a communication method according to an embodiment of this application.

S1501: A second communication apparatus sends fifth information to a first communication apparatus. Correspondingly, the first communication apparatus receives the fifth information from the second communication apparatus. The fifth information indicates a first frequency unit set. The fifth information is, for example, DCI or RRC.

For example, for a manner in which a first part of bits in the fifth information indicates the first frequency unit set, refer to the content in which the first part of bits or a part of or all bits in the first field indicate the first frequency unit set in FIG. 6. Details are not described herein again.

Optionally, the fifth information may further indicate a second frequency spacing. For example, a second part of bits in the fifth information indicates the second frequency spacing. For a manner in which the fifth information indicates the second frequency spacing, refer to the content in which the second part of bits indicates the first frequency spacing or the second field indicates the second frequency spacing in FIG. 6. Details are not described herein again. Alternatively, the second frequency spacing may be preconfigured or predefined in the first communication apparatus, for example, defined in the first communication apparatus by using a protocol, or the second frequency spacing may be indicated by the second communication apparatus by using sixth information different from the fifth information. This is not specifically limited in this embodiment of this application. Optionally, a value of the second frequency spacing is $RB_{start}^{UL,subband}$ . The second frequency spacing is a quantity of bits by which cyclic shift is performed on the first part of bits.

S1502: The first communication apparatus determines the first frequency unit set and a second frequency unit set based on the fifth information.

For content of determining the first frequency unit set by the first communication apparatus based on the fifth information, refer to the content of determining the first frequency unit set in FIG. 6. Details are not described herein again. The following describes a manner in which the first communication apparatus determines the second frequency unit set.

Determining manner 1: Perform cyclic shift on the first part of bits to obtain a third part of bits, and obtain the second frequency unit set based on the third part of bits.

A quantity of bits by which cyclic shift is performed is determined based on the second frequency spacing. Optionally, the quantity of bits by which cyclic shift is performed is the second frequency spacing. A direction of the cyclic shift may be one of the following:

A first type is shift from a low-order bit to a high-order bit.

A second type is shift from a high-order bit to a low-order bit.

A third type is determined by a positive or negative value of the second frequency spacing.

If the second frequency spacing is a positive value, shift from a low-order bit to a high-order bit is performed; or otherwise, shift from a high-order bit to a low-order bit is performed. Alternatively, if $R_{offset}$ is a negative value, shift from a low-order bit to a high-order bit is performed; or otherwise, shift from a high-order bit to a low-order bit is performed.

"Cyclic" may be understood as a shift that causes a bit that exceeds a most significant bit of a bitmap to be re-placed to a least significant bit of the bitmap, or a shift that causes a bit that exceeds a least significant bit of a bitmap to be re-placed to a most significant bit of the bitmap.

For example, the first part of bits are 0 0 0 0 0 0 1 1 0 0 1 0 0 0 0 0 0, and it is assumed that $R_{offset}$ = 3.

According to the first type, the third part of bits are 0 0 0 0 1 1 0 0 1 0 0 0 0 0 0 0 0.

According to the second type, the third part of bits are 0 0 0 0 0 0 0 0 0 1 1 0 0 1 0 0 0.

Assuming that the second frequency spacing is 12, according to the first type, the third part of bits are 0 0 0 0 0 0 0 0 0 0 0 0 1 1 0 0 1. Assuming that the second frequency spacing is -3, according to the third type (if $R_{offset}$ is a negative value, shift from a high-order bit to a low-order bit is performed), the third part of bits are: 0 0 0 0 0 0 0 0 0 1 1 0 0 1 0 0 0.

Determining manner 2: Perform a padding operation on the first part of bits to obtain a fourth part of bits, and determine the second frequency unit set based on the fourth part of bits.

Each bit in the first part of bits is associated with one frequency unit in which a frequency range of a first uplink subband is located. A bit quantity of the fourth part of bits may be preconfigured or predefined in the first communication apparatus, or may be obtained from the second communication apparatus. Optionally, the quantity of the fourth part of bits may be $N_{RBG}$.

The first communication apparatus may perform a padding operation (for example, padding with 1 or 0) on the first part of bits, to obtain the fourth part of bits. The fourth part of bits may indicate the second frequency unit set in a form of a bitmap shown by E1 in FIG. 6. Correspondingly, the first communication apparatus may parse the fourth part of bits in a manner of parsing the bitmap, to obtain the second frequency unit set. For a manner of obtaining the second frequency unit set, refer to the foregoing manner of determining the first frequency unit set in FIG. 6.

Alternatively, the fourth part of bits may indicate the second frequency unit set in the form shown by E2 in FIG. 6. Correspondingly, the first communication apparatus may parse the fourth part of bits in a manner of parsing the RIV, to obtain the second frequency unit set. For a manner of obtaining the second frequency unit set, refer to the foregoing manner of determining the first frequency unit set in FIG. 6.

In the determining manner 2, a starting location of the padding operation performed on the first part of bits may be predefined or preconfigured, or may be obtained from the second communication apparatus. For example, the starting location of the padding operation is a most significant bit of the first part of bits, or a least significant bit of the first part of bits. This is not limited in this embodiment of this application.

For example, if the first part of bits are 1001, the bit quantity of the fourth part of bits is 6, and the starting location of the padding operation is a least significant bit of the first part of bits, the fourth part of bits are 001001.

S1503: The first communication apparatus sends a first type of signal to the second communication apparatus on a part of or all frequency units in the first frequency unit set and on a part of or all frequency units in the second frequency unit set. Correspondingly, the second communication apparatus receives the first type of signal from the first communication apparatus.

In this embodiment of this application, the second communication apparatus indicates the first frequency unit set by using the fifth information, and the first communication apparatus may also determine frequency unit sets in two types of time units. This provides a manner of determining a frequency resource. In addition, in this embodiment, the first communication apparatus may perform an operation on the fifth information, to determine another frequency unit set. In this way, a quantity of bits of the fifth information does not need to be additionally increased.

Based on a same inventive concept, embodiments of this application further provide a communication apparatus.

FIG. 16 is a diagram of a structure of a communication apparatus according to an embodiment of this application. As shown in FIG. 16, the communication apparatus 1600 includes a transceiver module 1601 and a processing module 1602.

In a first embodiment, the communication apparatus 1600 may be configured to implement a function of a first communication apparatus, for example, the function of the first communication apparatus in FIG. 6. Correspondingly, the communication apparatus 1600 may also perform the steps performed by the first communication apparatus in FIG. 6.

For example, the transceiver module 1601 may be configured to receive first information, and send a first type of signal, and the processing module 1602 may be configured to perform step S602. For related content of the first information, the first type of signal, and content of S602, refer to the content described in FIG. 6.

In a second embodiment, the communication apparatus 1600 may be configured to implement a function of a second communication apparatus, for example, the function of the second communication apparatus in FIG. 6. Correspondingly, the communication apparatus 1600 may also perform the steps performed by the second communication apparatus in FIG. 6.

For example, the transceiver module 1601 may be configured to send first information and receive a first type of signal under control of the processing module 1602. For related content of the first information and the first type of signal, refer to the content described in FIG. 6.

In a third embodiment, the communication apparatus 1600 may be configured to implement a function of a first communication apparatus, for example, the function of the first communication apparatus in FIG. 13. Correspondingly, the communication apparatus 1600 may also perform the steps performed by the first communication apparatus in FIG. 13.

For example, the transceiver module 1601 may be configured to receive second information and third information, and send a first type of signal, and the processing module 1602 may be configured to perform step S1303. For related content of content of S1303, the second information, the third information, and the first type of signal, refer to the content described in FIG. 6.

In a fourth embodiment, the communication apparatus 1600 may be configured to implement a function of a second communication apparatus, for example, the function of the second communication apparatus in FIG. 13. Correspondingly, the communication apparatus 1600 may also perform the steps performed by the second communication apparatus in FIG. 13.

For example, the transceiver module 1601 may be configured to send second information and third information and receive a first type of signal under control of the processing module 1602. For related content of the second information, the third information, and the first type of signal, refer to the content described in FIG. 13.

In a fifth embodiment, the communication apparatus 1600 may be configured to implement a function of a first communication apparatus, for example, the function of the first communication apparatus in FIG. 14. Correspondingly, the communication apparatus 1600 may also perform the steps performed by the first communication apparatus in FIG. 14.

For example, the transceiver module 1601 may be configured to receive fourth information, and send a first type of signal, and the processing module 1602 may be configured to perform step S1402. For the fourth information, the first type of signal, and content of S1402, refer to the content described in FIG. 14.

In a sixth embodiment, the communication apparatus 1600 may be configured to implement a function of a second communication apparatus, for example, the function of the second communication apparatus in FIG. 14. Correspondingly, the communication apparatus 1600 may also perform the steps performed by the second communication apparatus in FIG. 14.

For example, the transceiver module 1601 may be configured to send fourth information and receive a first type of signal under control of the processing module 1602. For related content of the fourth information and the first type of signal, refer to the content described in FIG. 14.

In a seventh embodiment, the communication apparatus 1600 may be configured to implement a function of a first communication apparatus, for example, the function of the first communication apparatus in FIG. 15. Correspondingly, the communication apparatus 1600 may also perform the steps performed by the first communication apparatus in FIG. 15.

For example, the transceiver module 1601 may be configured to receive fifth information, and send a first type of signal, and the processing module 1602 may be configured to perform step S1502. For the fifth information, the first type of signal, and content of S1502, refer to the content described in FIG. 15.

In an eighth embodiment, the communication apparatus 1600 may be configured to implement a function of a second communication apparatus, for example, the function of the second communication apparatus in FIG. 15. Correspondingly, the communication apparatus 1600 may also perform the steps performed by the second communication apparatus in FIG. 15.

For example, the transceiver module 1601 may be configured to send fifth information and receive a first type of signal under control of the processing module 1602. For related content of the fifth information and the first type of signal, refer to the content described in FIG. 15.

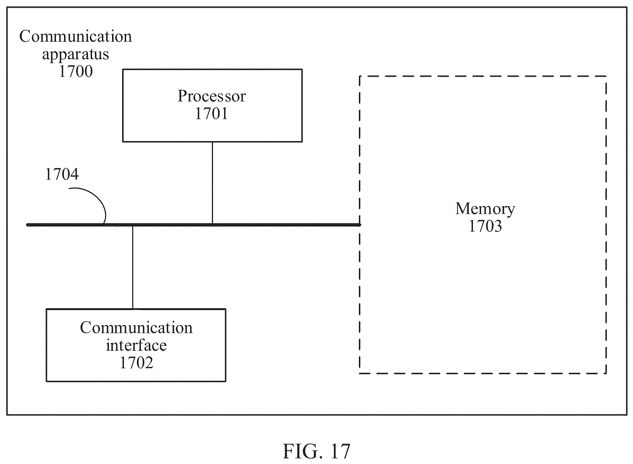

FIG. 17 is a diagram of a structure of a communication apparatus according to an embodiment of this application. As shown in FIG. 17, the communication apparatus 1700 includes a processor 1701 and a communication interface 1702. The processor 1701 and the communication interface 1702 are coupled to each other. It may be understood that the communication interface 1702 may be a transceiver or an input/output interface.

The processor 1701 and the communication interface 1702 may implement any one of the foregoing communication methods, for example, any one of the communication methods shown in FIG. 6 and FIG. 13 to FIG. 15. The processor 1701 and the communication interface 1702 may also implement any one of the functions of the first communication apparatus in FIG. 6, and FIG. 13 to FIG. 15. Alternatively, the processor 1701 and the communication interface 1702 may also implement any one of the functions of the second communication apparatus in FIG. 6, and FIG. 13 to FIG. 15.

It may be understood that the processor 1701 may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a transistor logic device, a hardware component, or any combination thereof. The general-purpose processor may be a microprocessor or any regular processor or the like.

Optionally, the communication apparatus 1700 may further include a memory 1703, configured to store instructions to be executed by the processor 1701, or store input data required by the processor 1701 to run the instructions, or store data generated after the processor 1701 runs the instructions.

The memory 1703 may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid-state drive (solid-state drive, SSD).

Any two of the processor 1701, the communication interface 1702, and the memory 1703 may communicate with each other through a bus 1704. The bus 1704 may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

Optionally, the processor 1701 is configured to implement the functions of the processing module 1602, and the communication interface 1702 is configured to implement the functions of the transceiver module 1601.

An embodiment of this application provides a communication system. The communication system includes the first communication apparatus and the second communication apparatus in FIG. 6. For functions of the first communication apparatus and the second communication apparatus, refer to the content described in FIG. 6.

An embodiment of this application provides a communication system. The communication system includes the first communication apparatus and the second communication apparatus in FIG. 13. For functions of the first communication apparatus and the second communication apparatus, refer to the content described in FIG. 13.

An embodiment of this application provides a communication system. The communication system includes the first communication apparatus and the second communication apparatus in FIG. 14. For functions of the first communication apparatus and the second communication apparatus, refer to the content described in FIG. 14.

An embodiment of this application provides a communication system. The communication system includes the first communication apparatus and the second communication apparatus in FIG. 15. For functions of the first communication apparatus and the second communication apparatus, refer to the content described in FIG. 15.

An embodiment of this application provides a chip system. The chip system includes a processor and an interface. The processor is configured to invoke instructions from the interface and run the instructions. When executing the instructions, the processor implements any one of the foregoing communication methods, for example, any one of the communication methods shown in FIG. 6, and FIG. 13 to FIG. 15.

An embodiment of this application provides a computer-readable storage medium. The computer-readable storage medium is configured to store a computer program or instructions. When the computer program or the instructions are run, any one of the foregoing communication methods is implemented, for example, any one of the communication methods shown in FIG. 6, and FIG. 13 to FIG. 15 is implemented.

An embodiment of this application provides a computer program product including instructions. When the computer program product runs on a computer, any one of the foregoing communication methods is implemented, for example, any one of the communication methods shown in FIG. 6, and FIG. 13 to FIG. 15 is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

   receiving first information, wherein the first information indicates a first frequency unit set and a first frequency spacing, the first frequency spacing indicates a quantity of frequency units that space the first frequency unit set and a second frequency unit set, and the first frequency unit set is a frequency unit in a first type of time unit; and
   sending a first type of signal on a part of or all first frequency units in the first frequency unit set and on a part of or all second frequency units in the second frequency unit set, wherein
   the second frequency unit set is determined based on the first frequency spacing and the first frequency unit set, the second frequency unit set is a frequency unit in a second type of time unit, the first type of time unit is one of a subband full-duplex SBFD time unit and a non-SBFD time unit, the second type of time unit is the other of the subband full-duplex SBFD time unit and the non-SBFD time unit, and the non-SBFD time unit comprises an uplink time unit and/or a flexible time unit.

2. The method according to claim 1, wherein

a frequency range of at least one frequency unit in the second frequency unit set is different from a frequency range of any frequency unit in the first frequency unit set.

3. The method according to claim 1 or 2, wherein

   a first part of bits indicates the first frequency unit set, a second part of bits indicates the first frequency spacing, and both the first part of bits and the second part of bits belong to a first field in the first information; or
   a part of or all bits in the first field in the first information indicate the first frequency unit set, and a second field in the first information indicates the first frequency spacing.

4. The method according to claim 3, wherein

   a bit index of the first part of bits in the first field is associated with an index of a frequency unit in which a frequency range of a first uplink subband is located, and the first uplink subband is an uplink subband in the SBFD time unit; and/or
   a bit quantity of the first part of bits is M, and M is a positive integer.

5. The method according to claim 3, wherein the first part of bits comprises:

   M bits starting from a most significant bit and spanning from a high-order bit to a low-order bit in the first field; or
   M bits starting from a least significant bit and spanning from a low-order bit to a high-order bit in the first field.

6. The method according to claim 4 or 5, wherein the bit quantity of the first part of bits is one of the following:

   a quantity of frequency units in which the frequency range of the first uplink subband is located; or

   $$\left\lceil \log_2\left(N_{RB}^{UL,Subband}\left(N_{RB}^{UL,Subband} + 1\right)/2\right)\right\rceil;$$

   or

   $$\left\lceil \log_2\left(N_{RB}^{UL,BWP}\left(N_{RB}^{UL,BWP} + 1\right)/2\right)\right\rceil,$$

   wherein

   $N_{RB}^{UL,Subband}$ represents a quantity of resource blocks comprised in the first uplink subband, $N_{RB}^{UL,BWP}$ represents a quantity of resource blocks comprised in an uplink bandwidth part, and the first uplink subband is an uplink subband in the SBFD time unit.

7. The method according to any one of claims 3 to 6, wherein the second part of bits is one of the following:

   other bits; or
   at least one bit starting from a most significant bit and spanning from a high-order bit to a low-order bit in the other bits; or
   at least one bit starting from a least significant bit and spanning from a low-order bit to a high-order bit in the other bits, wherein
   the other bits are bits other than the first part of bits in the first field.

8. The method according to claim 7, wherein a bit quantity of the second part of bits is one of the following:

   $$N_{RBG} - N_{RBG}^{UL,subband};$$

   or

   $$\left\lceil \log_2\left(N_{RB}^{UL,BWP}\left(N_{RB}^{UL,BWP} + 1\right)/2\right)\right\rceil - \left\lceil \log_2\left(N_{RB}^{UL,Subband}\left(N_{RB}^{UL,Subband} + 1\right)/2\right)\right\rceil;$$

or

$$N_{RBG} - \lceil \log_2(N_{RB}^{UL,BWP}(N_{RB}^{UL,BWP} + 1)/2) \rceil;$$

or

$$\max(\lceil \log_2(N_{RB}^{UL,BWP}(N_{RB}^{UL,BWP} + 1)/2) \rceil, N_{RBG}) - M;$$

or

a first value, wherein the first value is an integer greater than 0, wherein

$N_{RBG}$ represents a quantity of resource block groups comprised in the uplink bandwidth part, $N_{RB}^{UL,Subband}$ represents the quantity of resource blocks comprised in the first uplink subband, $N_{RB}^{UL,BWP}$ represents the quantity of resource blocks comprised in the uplink bandwidth part, M is the bit quantity of the first part of bits, max represents taking a maximum value, and ⌈ ⌉ represents rounding up.

9. The method according to any one of claims 3 to 8, wherein

each bit in the first part of bits corresponds to one frequency unit in which the frequency range of the first uplink subband is located, a value of each bit indicates that the frequency unit belongs to or does not belong to the first frequency unit set, and the first uplink subband is an uplink subband in the SBFD time unit; or
the first part of bits indicates a first resource indication value RIV, and the first RIV is used to determine the first frequency unit set.

10. The method according to claim 9, wherein the method further comprises:

determining a first number and a quantity of allocated resource blocks based on the first RIV, wherein the first number is a number, in the first uplink subband, of a starting frequency unit in the first frequency unit set, and the first uplink subband is an uplink subband in the SBFD time unit, wherein
an index of any frequency unit in the first frequency unit set is:

any index from a first index to a second index, wherein
the first index is a sum of the first number and an index of a starting frequency unit in the first uplink subband, and the second index is determined based on the first index and the quantity of allocated resource blocks.

11. The method according to any one of claims 3 to 10, wherein
the second part of bits indicates a second value, and the second value is used to determine the first frequency spacing from a first frequency spacing set.

12. The method according to claim 3, wherein

the second field indicates a third value, and the first frequency spacing is a frequency spacing corresponding to the third value in a time domain resource allocation TDRA table; and
the TDRA table indicates a first time domain resource set and a first frequency spacing set, and the first time domain resource set is used to determine a time domain resource for transmitting the first type of signal.

13. The method according to any one of claims 1 to 12, wherein the method further comprises:
receiving first indication information, wherein the first indication information indicates a first time unit, the first time unit is an hth time unit used to transmit the first type of signal, a type of the first type of time unit is a type of the first time unit, and h is a positive integer.

14. The method according to any one of claims 1 to 13, wherein
the first type of time unit is an SBFD time unit, and the second type of time unit is an uplink time unit.

**15.** A communication method, comprising:

sending first information, wherein the first information indicates a first frequency unit set and a first frequency spacing, the first frequency spacing indicates a quantity of frequency units that space the first frequency unit set and a second frequency unit set, and the first frequency unit set is a frequency unit in a first type of time unit; and receiving a first type of signal on a part of or all first frequency units in the first frequency unit set and on a part of or all second frequency units in the second frequency unit set, wherein the second frequency unit set is a frequency unit in a second type of time unit, the first type of time unit is one of a subband full-duplex SBFD time unit and a non-SBFD time unit, the second type of time unit is the other of the subband full-duplex SBFD time unit and the non-SBFD time unit, and the non-SBFD time unit comprises an uplink time unit and/or a flexible time unit.

**16.** The method according to claim 15, wherein
a frequency range of at least one frequency unit in the second frequency unit set is different from a frequency range of any frequency unit in the first frequency unit set.

**17.** The method according to claim 15 or 16, wherein

a first part of bits indicates the first frequency unit set, a second part of bits indicates the first frequency spacing, and both the first part of bits and the second part of bits belong to a first field in the first information; or
a part of or all bits in the first field in the first information indicate the first frequency unit set, and a second field in the first information indicates the first frequency spacing.

**18.** The method according to claim 17, wherein

a bit index of the first part of bits in the first field is associated with an index of a frequency unit in which a frequency range of a first uplink subband is located, and the first uplink subband is an uplink subband in the SBFD time unit; and/or
a bit quantity of the first part of bits is M, and M is a positive integer.

**19.** The method according to claim 17, wherein the first part of bits comprises:

M bits starting from a most significant bit and spanning from a high-order bit to a low-order bit in the first field; or
M bits starting from a least significant bit and spanning from a low-order bit to a high-order bit in the first field.

**20.** The method according to claim 18 or 19, wherein the bit quantity of the first part of bits is one of the following:

a quantity of frequency units in which the frequency range of the first uplink subband is located; or

$$\left\lceil \log_2\left(N_{RB}^{UL,Subband}\left(N_{RB}^{UL,Subband} + 1\right)/2\right)\right\rceil;$$

or

$$\left\lceil \log_2\left(N_{RB}^{UL,BWP}\left(N_{RB}^{UL,BWP} + 1\right)/2\right)\right\rceil,$$

wherein
$N_{RB}^{UL,Subband}$ represents a quantity of resource blocks comprised in the first uplink subband, $N_{RB}^{UL,BWP}$ represents a quantity of resource blocks comprised in an uplink bandwidth part, and the first uplink subband is an uplink subband in the SBFD time unit.

**21.** The method according to any one of claims 17 to 20, wherein the second part of bits is one of the following:

other bits; or
at least one bit starting from a most significant bit and spanning from a high-order bit to a low-order bit in the other bits; or
at least one bit starting from a least significant bit and spanning from a low-order bit to a high-order bit in the other bits, wherein
the other bits are bits other than the first part of bits in the first field.

22. The method according to claim 21, wherein a bit quantity of the second part of bits is one of the following:

$$N_{RBG} - N_{RBG}^{UL,subband};$$

or

$$\left\lceil \log_2\left(N_{RB}^{UL,BWP}\left(N_{RB}^{UL,BWP} + 1\right)/2\right)\right\rceil - \left\lceil \log_2\left(N_{RB}^{UL,Subband}\left(N_{RB}^{UL,Subband} + 1\right)/2\right)\right\rceil;$$

or

$$N_{RBG} - \left\lceil \log_2\left(N_{RB}^{UL,BWP}\left(N_{RB}^{UL,BWP} + 1\right)/2\right)\right\rceil;$$

; or

$$\max\left(\left\lceil \log_2\left(N_{RB}^{UL,BWP}\left(N_{RB}^{UL,BWP} + 1\right)/2\right)\right\rceil, N_{RBG}\right) - M;$$

or

a first value, wherein the first value is an integer greater than 0, wherein

$N_{RBG}$ represents a quantity of resource block groups comprised in the uplink bandwidth part, $N_{RB}^{UL,Subband}$ represents the quantity of resource blocks comprised in the first uplink subband, $N_{RB}^{UL,BWP}$ represents the quantity of resource blocks comprised in the uplink bandwidth part, M is the bit quantity of the first part of bits, max represents taking a maximum value, and $\lceil \ \rceil$ represents rounding up.

23. The method according to any one of claims 17 to 22, wherein

each bit in the first part of bits corresponds to one frequency unit in which the frequency range of the first uplink subband is located, a value of each bit indicates that the frequency unit belongs to or does not belong to the first frequency unit set, and the first uplink subband is an uplink subband in the SBFD time unit; or
the first part of bits indicates a first resource indication value RIV, and the first RIV is used to determine the first frequency unit set.

24. The method according to any one of claims 17 to 23, wherein
the second part of bits indicates a second value, and the second value is used to determine the first frequency spacing from a first frequency spacing set.

25. The method according to claim 17, wherein

the second field indicates a third value, and the first frequency spacing is a frequency spacing corresponding to the third value in a time domain resource allocation TDRA table; and
the TDRA table indicates a first time domain resource set and a first frequency spacing set, and the first time domain resource set is used to determine a time domain resource for transmitting the first type of signal.

26. The method according to any one of claims 15 to 25, wherein the method further comprises:
sending first indication information, wherein the first indication information indicates a first time unit, the first time unit is an h$^{th}$ time unit used to transmit the first type of signal, a type of the first type of time unit is a type of the first time unit, and h is a positive integer.

27. The method according to any one of claims 15 to 26, wherein

the first type of time unit is an SBFD time unit, and the second type of time unit is an uplink time unit.

28. A communication apparatus, wherein the communication apparatus comprises:

   a module configured to perform the method according to any one of claims 1 to 14; or
   a module configured to perform the method according to any one of claims 15 to 27.

29. A communication apparatus, comprising a processor and a communication interface, wherein the communication interface is configured to receive a signal from an apparatus other than the communication apparatus and transmit the signal to the processor, or send a signal from the processor to an apparatus other than the communication apparatus, and the processor implements the method according to any one of claims 1 to 27 through a logic circuit or by executing code instructions.

30. A computer program product comprising instructions, wherein when the instructions are run by a communication apparatus, the communication apparatus is enabled to perform the method according to any one of claims 1 to 27.

31. A computer-readable storage medium, wherein the storage medium stores a computer program or instructions, and when the computer program or the instructions are executed by a communication apparatus, the method according to any one of claims 1 to 27 is implemented.

| D | D | D | S | U |
|---|---|---|---|---|

FIG. 1

Uplink subband

| D | D | D | D | D |
|---|---|---|---|---|
|   |   |   |   |   |
| D | D | D | D | D |

FIG. 2

Uplink subband

| D | D | D | S |   |
|---|---|---|---|---|
|   |   |   |   | U |
| D | D | D | S |   |

FIG. 3

Uplink subband

FIG. 4

FIG. 5

FIG. 6

FIG. 7

First part
of bits

| 1 | 0 | 1 | 1 | 1 |

7

6

5

4

3

2

1

0

First uplink
subband

First frequency
unit set

FIG. 8

FIG. 9A

FIG. 9B

FIG. 10

FIG. 11

First frequency unit set

Second frequency unit set

First frequency
unit set

Second frequency
unit set

| | | | | |
|---|---|---|---|---|
| D | D | D | S | |
| | | | | U |
| | D | D | S | |

Uplink subband (uplink transmission)

FIG. 12

First communication
apparatus

Second communication
apparatus

S1301: Second information (indicating a first
frequency spacing)

S1302: Third information (indicating a first
frequency unit set)

S1303: Determine the first
frequency unit set and a
second frequency unit set

S1304: Send a first type of signal on a part of or
all frequency units in the first frequency unit set
and on a part of or all frequency units in the
second frequency unit set

FIG. 13

First communication apparatus

Second communication apparatus

S1401: Fourth information (indicating a first frequency unit set)

S1402: Determine the first frequency unit set and a second frequency unit set based on the first frequency unit set and a first frequency spacing

S1403: Send a first type of signal on a part of or all frequency units in the first frequency unit set and on a part of or all frequency units in the second frequency unit set

FIG. 14

First communication
apparatus

Second communication
apparatus

S1501: Fifth information (indicating a first
frequency unit set)

S1502: Determine the first
frequency unit set and a second
frequency unit set based on the
fifth information

S1503: Send a first type of signal on a part of
or all frequency units in the first frequency
unit set and on a part of or all frequency units
in the second frequency unit set

FIG. 15

Communication apparatus
1600

Transceiver module
1601

Processing module
1602

FIG. 16

FIG. 17

## INTERNATIONAL SEARCH REPORT

| International application No. |
|---|
| **PCT/CN2024/092056** |

**A.    CLASSIFICATION OF SUBJECT MATTER**

H04W 72/0453(2023.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; ENTXT; CNKI; 3GPP: 子带, 非重叠, 全双工, 频率, 间隔, 偏移, 跳变, 跳频, 非SBFD, 上行, 灵活, 特殊, 时间单元, 时隙, subband, non-overlapping, full duplex, SBFD, frequency, offset, hopping, non-SBFD, UpLink, UL, flexible, slot

**C.    DOCUMENTS CONSIDERED TO BE RELEVANT**

| Category* | Citation of document, with indication, where appropriate, of the relevant passages | Relevant to claim No. |
|---|---|---|
| PX | CN 116724641 A (BEIJING XIAOMI MOBILE SOFTWARE CO., LTD.) 08 September 2023 (2023-09-08) description, paragraphs [0041]-[0431] | 1-31 |
| X | MEDIATEK INC. "Discussion on subband non-overlapping full duplex for NR" *3GPP TSG RAN WG1 Meeting #112, R1-2301594*, 18 February 2023 (2023-02-18), text, section 2.2 | 1-31 |
| A | CN 115733505 A (HUAWEI TECHNOLOGIES CO., LTD.) 03 March 2023 (2023-03-03) entire document | 1-31 |
| A | US 2021360664 A1 (QUALCOMM INC.) 18 November 2021 (2021-11-18) entire document | 1-31 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2024** | **23 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092056**

| Patent document cited in search report | | | Publication date (day/month/year) | Patent family member(s) | | | Publication date (day/month/year) |
|---|---|---|---|---|---|---|---|
| CN | 116724641 | A | 08 September 2023 | None | | | |
| CN | 115733505 | A | 03 March 2023 | None | | | |
| US | 2021360664 | A1 | 18 November 2021 | US | 11871410 | B2 | 09 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310541409